# FASCICULE DE BREVET EUROPEEN

(11) **EP 0 776 823 B1**
(45) Date de publication et mention de la délivrance du brevet: **17.05.2000**
(21) Numéro de dépôt: 96402540.7
(22) Date de dépôt: 26.11.1996
(51) Int. Cl.: B64D 45/02, B64C 11/26

(54) **Pale à blindage de protection renforcée contre la foudre, pour rotor de giravion**
Rotorblätter eines Drehflügelflugzeuges mit Blitzschutzschild
Helicopter rotor blade with reinforced shielding against lightning strike

(30) Priorité: 29.11.1995 FR 9514128
(43) Date de publication de la demande: 04.06.1997
(73) Titulaire: EUROCOPTER, F-13725 Marignane Cédex (FR)
(72) Inventeur: Lorin de la Grandmaison, François-Marie, 13121 Aurons (FR); Tagliana, Bernard Marc, 13008 Marseille (FR); Rauch, Patrice Paul René, 13710 Fuveau (FR)
(74) Mandataire: Bérogin, Francis

(56) Documents cités:
- US-A- 3 923 421
- US-A- 4 944 655

## Description

L'invention concerne une pale à blindage de protection renforcée contre la foudre, pour un rotor de giravion, et en particulier pour un rotor notamment arrière d'hélicoptère.

L'invention se rapporte à une pale de type connu, comprenant une structure composite, essentiellement en matériau composite à matrice synthétique et fibres de renfort minérales et/ou organiques, réalisant une partie courante profilée délimitée entre une surface d'extrados et une surface d'intrados qui s'étendent, selon la corde de la pale, entre un bord d'attaque et un bord de fuite, et, selon l'envergure de la pale, entre une extrémité de ladite partie courante dénommée communément saumon et un pied de pale qui prolonge l'extrémité opposée de ladite partie courante, et qui comporte des moyens d'attache de la pale, pour sa liaison à un moyeu de rotor. Le saumon d'extrémité peut, d'une part, avoir une forme en plan en continuité par rapport à la partie courante ou être évolutive, et, d'autre part, constituer un élément structural soit intégré dans la continuité de la structure de la partie courante, soit rapporté et distinct de la structure de la partie courante, l'assemblage étant alors assuré par des moyens mécaniques ou par collage autour de renforts dimensionnés en conséquence.

Les moyens d'attache de la pale peuvent assurer la liaison de cette pale directement au moyeu du rotor ou indirectement à ce moyeu, par l'intermédiaire d'un organe de liaison, communément appelé manchon, lui-même relié au moyeu par des moyens de retenue et d'articulation sur ce dernier.

US-A-4,944,655 décrit une pale d'hélice en matière plastique armée de fibres comprenant une partie courante profilée et destinée à être rattachée par un pied de pale à un moyeu d'hélice comportant des parties métalliques, la pale comprenant également un système de protection combinée contre l'érosion, le givrage et la foudre.

Ce système de protection combinée comporte un blindage de protection contre la foudre, qui comprend une coiffe métallique de protection, réalisée en un matériau qui est notamment électriquement conducteur, par exemple en titane, ou alliage de titane, et qui est fixée au bord d'attaque et aux parties adjacentes à ce dernier des surfaces d'extrados et d'intrados de la partie courante de la pale, pour assurer la protection du bord d'attaque, et un capuchon de protection du saumon de pale, à l'extrémité de la partie courante qui est opposée à celle prolongée par le pied de pale, ce capuchon étant également métallique et électriquement conducteur, et s'étendant sur toute la corde de l'extrémité du saumon de pale qu'il revêt, en étant fixé de manière à être en continuité électrique avec la coiffe de protection du bord d'attaque. Enfin, sur le pied de pale ou au voisinage de ce dernier, le blindage de protection de la pale d'hélice contre la foudre comprend des moyens électriquement conducteurs, tels que câbles et/ou rubans métalliques, pour assurer la continuité électrique entre la coiffe de protection du bord d'attaque et les parties métalliques et électriquement conductrices du moyeu, pour la mise à la masse du blindage de protection contre la foudre.

Le problème à la base de l'invention est de renforcer la tenue à la foudre des pales de rotors de giravions, tels que les hélicoptères, et en particulier des pales à structure composite du type défini ci-dessus, notamment des pales de rotors arrière, pour satisfaire aux exigences accrues de nouvelles normes en vigueur, et qui ne peuvent être respectées par les moyens classiques utilisés sur les pales de tels rotors pour assurer le passage du courant de foudre, à savoir des clinquants ou minces rubans métalliques électriquement conducteurs, par exemple de cuivre, intégrés dans la structure composite des pales et s'étendant du saumon au pied des pales.

Le but de l'invention est d'obtenir l'amélioration recherchée du comportement des pales de rotors d'hélicoptères à la foudre en appliquant les enseignements de US-A-4,944,655, et en perfectionnant les moyens de blindage proposés dans ce brevet sur des pales de rotors d'hélicoptères, de sorte à rendre ces pales plus tolérantes vis-à-vis de courants de foudre de forte intensité (environ 3 fois la valeur de l'intensité du courant de foudre considéré dans les normes antérieurement prises en compte pour la réalisation de telles pales). Selon les constats en utilisation, ces courants impactent statistiquement plus souvent les pales et plus particulièrement les saumons d'extrémité des pales, à cause de leur forme naturellement protubérante vis-à-vis de l'ensemble de l'aéronef.

En particulier, l'invention a pour but de perfectionner le blindage connu par US-A-4,944,655 de manière à améliorer la tenue résiduelle après impact à la foudre, pour permettre la poursuite normale du vol, et la qualité de la protection assurée par le capuchon de saumon de pale, et de préférence également par la coiffe de bord d'attaque vis-à-vis des phénomènes de décollement qui peuvent se produire entre d'une part le capuchon et éventuellement la coiffe et, d'autre part, la structure composite de la pale, en raison notamment des phénomènes de répulsion se développant entre eux lorsqu'une telle pale est foudroyée.

Un autre but de l'invention est d'assurer la tenue résiduelle après impact à la foudre, pour permettre la poursuite normale du vol, et la qualité de la protection, comme mentionné ci-dessus, à l'aide d'un capuchon rapporté sur la pale et compatible, en rattrapage, avec des pales déjà équipées d'une coiffe de bord d'attaque électriquement conductrice, sans dépose de cette coiffe, ainsi qu'avec des pales de nouvelle génération à bord d'attaque protégé par une coiffe optimisée pour le passage du courant de foudre. De plus, l'adjonction d'un tel capuchon tend à éviter ou à minimiser les dommages qui pourraient être occasionnés à la structure composite de la pale en cas de foudroiement.

A cet effet, la pale à blindage de protection renforcée contre la foudre selon l'invention, ayant une structure composite et du type mentionné ci-dessus, est munie d'un blindage de protection contre la foudre comprenant :
- une coiffe de protection du bord d'attaque, ladite coiffe étant métallique, électriquement conductrice, et comprenant une aile d'extrados et une aile d'intrados, adjacentes le long du bord d'attaque et fixées sur des parties sous-jacentes des surfaces d'extrados et d'intrados,
- un capuchon de protection dudit saumon de pale, ledit capuchon étant distinct de la coiffe et rapporté sur la pale de sorte à coiffer au moins l'extrémité dudit saumon de pale, et étant métallique, électriquement conducteur, et comprenant une aile d'extrados et une aile d'intrados qui s'étendent sur toute la corde d'extrémité dudit saumon de pale et sont appliquées sur des parties sous-jacentes desdites surfaces respectivement d'extrados et d'intrados au niveau du saumon, le capuchon étant fixé en continuité électrique avec ladite coiffe, soit directement, soit au moyen d'au moins un cavalier intermédiaire, lui-même conducteur, et fixé en continuité électrique avec la coiffe et le capuchon, et
- des moyens électriquement conducteurs sur ledit pied de pale, et destinés à assurer la continuité électrique entre ladite coiffe et des moyens électriquement conducteurs dudit moyeu, pour la mise à la masse dudit blindage, et se caractérise en ce qu'au moins ledit capuchon a une aile d'extrados dont les dimensions, au moins selon l'envergure, sont différentes des dimensions de son aile d'intrados.

Ainsi, on améliore la tenue de la protection assurée par le capuchon à l'encontre des phénomènes de décollement se développant entre le capuchon et la structure composite du saumon de pale sous l'effet des forces de répulsion pouvant solliciter les ailes d'extrados et d'intrados du capuchon tout en évitant ou en minimisant les endommagements de la structure composite lorsque la pale est foudroyée.

Pour faciliter la réalisation de la coiffe ainsi qu'améliorer la tenue et la qualité vis-à-vis de l'érosion et de la foudre, et comme cela est déjà le cas sur certaines pales à bord d'attaque protégé par une coiffe électriquement conductrice et dont la protection à la foudre doit être améliorée, la coiffe peut avoir des ailes d'extrados et d'intrados ayant sensiblement les mêmes dimensions, au moins selon la corde de la pale, et éventuellement aussi selon l'envergure. Les ailes d'extrados et d'intrados de la coiffe sont alors sensiblement symétriques l'une de l'autre par rapport au plan de corde de la pale.

Mais, avantageusement, la coiffe a une aile d'extrados dont les dimensions, au moins selon la corde, sont différentes de celles de son aile d'intrados.

On sait en effet que le passage d'un courant électrique de l'extrémité d'une aile d'un corps conducteur recourbé en U jusqu'à l'extrémité de l'autre aile s'accompagne de l'apparition sur les ailes de forces répulsives d'origine magnétique, issues des composantes antagonistes du vecteur de courant et d'autant plus importantes que l'intensité du courant est élevée et le rayon de courbure du corps est faible. La réalisation d'ailes d'extrados et d'intrados dissymétriques, par rapport au plan de corde de la pale, surtout sur le capuchon et de préférence également sur la coiffe permet d'éviter les décollements locaux, par rapport à la structure composite, des ailes du capuchon et de la coiffe dans leurs zones voisines du bord d'attaque et du bord de fuite.

En outre, si on donne à l'aile d'intrados de la coiffe une largeur, selon la corde, supérieure à celle de son aile d'extrados, on obtient simultanément une meilleure tenue à l'érosion à la pluie et au sable, tandis qu'une largeur, selon la corde, de l'aile d'extrados supérieure à celle de l'aile d'intrados de la coiffe procure un meilleur écoulement aérodynamique sur l'extrados.

Pour améliorer le passage du courant de foudre dans le capuchon, vers la coiffe et dans cette dernière, il est en outre avantageux que l'une au moins, mais de préférence chacune des ailes d'extrados et d'intrados du capuchon présente une ou plusieurs des conditions géométriques suivantes :
- cette aile a une dimension et/ou section de matière, selon l'envergure, qui est plus grande dans la zone voisine du bord d'attaque que dans la zone voisine du bord de fuite, et/ou qui n'est pas sensiblement inférieure, dans sa zone voisine du bord d'attaque, à la dimension et/ou section de matière, selon la corde, de la zone adjacente de l'aile correspondante d'extrados ou d'intrados de la coiffe,
- cette aile présente une dimension et/ou section de matière, selon l'envergure, qui se réduit sensiblement progressivement d'une zone voisine du bord d'attaque à une zone voisine du bord de fuite, puis qui augmente dans une zone directement adjacente au bord de fuite et jusqu'à ce dernier, pour la fixation par au moins un rivet dans cette zone voisine du bord de fuite,
- cette aile présente, dans sa zone voisine du bord d'attaque, un bord s'étendant sur la surface d'extrados ou d'intrados correspondante et qui présente une partie concave, avec un rayon de raccordement, sensiblement prolongée par le bord correspondant de l'aile d'extrados ou d'intrados correspondante de la coiffe,
- cette aile a, au moins dans sa zone voisine du bord d'attaque, une section transversale développée qui est au moins égale ou supérieure à celle de l'aile correspondante d'extrados ou d'intrados de la coiffe dans sa zone adjacente au capuchon, ce qui de plus améliore la résistance à l'érosion du capuchon, exposé, en rotation, à une vitesse relative plus importante que le reste de la pale, la masse accrue du capuchon dans cette zone éventuellement surépaissie permettant également de recentrer la pale par rapport à son axe longitudinal de changement de pas.

Avantageusement, les bords des ailes d'extrados et d'intrados du capuchon, qui s'étendent sur les surfaces d'extrados et d'intrados, évoluent parallèlement l'un à l'autre mais sont décalés l'un par rapport à l'autre selon l'envergure de la pale, en suivant par exemple une ligne polygonale ou avec une courbure continue.

La résistance à l'arrachement du capuchon sous l'effet des forces centrifuges et des forces répulsives précitées est assurée par des moyens de fixation au moins en partie électriquement conducteurs, fixant ce capuchon contre au moins la tranche d'extrémité de la structure composite au niveau du saumon de pale.

Pour assurer une bonne cohésion du capuchon avec la structure composite de la pale en même temps qu'une bonne protection de cette structure composite à la tranche d'extrémité du saumon, les moyens de fixation comprennent au moins un adhésif éventuellement électriquement conducteur, telle qu'une colle ou un adhésif polymérisable de type résine sur film supporté ou non, assurant le collage du capuchon contre au moins une partie de la tranche d'extrémité du saumon de pale et/ou une partie de l'une au moins desdites surfaces d'extrados et d'intrados de la structure composite, et/ou une partie de la coiffe et/ou du cavalier intermédiaire lui-même collé contre au moins une partie de la coiffe. A noter que le caractère conducteur du collage n'est pas indispensable mais avantageux dans les zones de recouvrement capuchon/coiffe ou capuchon/cavalier et coiffe/cavalier. Si la continuité électrique entre le capuchon et la coiffe est assurée au moyen d'un cavalier conducteur, tel qu'un morceau de clinquant ou ruban métallique apparent sur la structure composite de la pale et partiellement recouvert, d'une part, par le capuchon et, d'autre part, par la coiffe, et si ce clinquant ou ruban est collé par une colle diélectrique, cette colle empêche le passage du courant de foudre selon l'envergure : il se développe une répulsion. Dans ce cas, il faut que la colle soit conductrice, et la qualité de la liaison assurée par le collage correspondant peut être améliorée, y compris en ce qui concerne l'écoulement du courant de foudre, en complétant le collage par un rivetage ou un vissage.

Pour cette raison, les moyens de fixation comprennent avantageusement de plus des moyens mécaniques présentant de préférence des formes protubérantes, telles que vis et rivets.

Ainsi, ces moyens mécaniques de fixation assurent ou améliorent la tenue et la qualité de la protection en cas de décollement en extrémité de pale, ce qui procure un aspect "fail safe" au collage prévu entre la structure composite de la pale et le capuchon. Un rivetage, effectué immédiatement à l'issue de l'opération de collage (avant polymérisation de l'adhésif) peut assurer de meilleures conditions de cohésion du capuchon et de la coiffe, voire du cavalier intermédiaire, sur le substrat composite extrados ou intrados (meilleure pression de contact appliquée à l'assemblage). En outre, l'utilisation de moyens mécaniques de fixation présentant des formes protubérantes permet que ces moyens constituent, en raison de leurs formes, des points prédéterminés d'impacts ou de sortie de la foudre, de sorte que ces moyens protègent la structure composite environnante de la pale, d'autant plus que la mise à la masse de ces moyens mécaniques de fixation est assurée par le capuchon et la coiffe. A cet effet, l'extrémité de la coiffe vers le saumon de pale est avantageusement au moins partiellement chevauchée soit directement par le capuchon qui est fixé sur la coiffe en continuité électrique avec elle, soit par l'intermédiaire d'au moins un cavalier conducteur de même nature, externe ou interne, fixé par collage, de préférence conducteur, et/ou par rivetage ou vissage entre le capuchon et la coiffe. Il en résulte une excellente protection contre les dommages qui pourraient être occasionnés à la structure composite entourant les moyens mécaniques de fixation, en cas de foudroiement.

Par ailleurs, on sait que les pales de rotor d'hélicoptères sont souvent munies, au saumon de pale, de vis fixées dans la tranche d'extrémité du saumon de pale, à proximité du bord d'attaque, et qui constituent par elles-mêmes des masses d'équilibrage et/ou sont utilisées pour fermer des boîtiers, logements ou cavités ménagés dans le saumon de pale et destinés à contenir des masses d'équilibrage et/ou de réglage dynamique.

Avantageusement, dans une pale selon l'invention, on profite de la présence de telles vis, et les moyens mécaniques de fixation du capuchon contre au moins la tranche d'extrémité du saumon de pale comprennent au moins une telle vis d'équilibrage et/ou de fermeture d'un logement d'au moins une masse d'équilibrage et/ou de réglage dynamique, cette vis se vissant dans une zone de ladite tranche d'extrémité du saumon de pale qui est plus proche du bord d'attaque que du bord de fuite. Le capuchon peut comprendre non seulement des ailes d'extrados et d'intrados, mais également une nervure d'extrémité, électriquement conductrice, reliant les ailes d'extrados et d'intrados, et qui s'étend sur toute la section de la tranche d'extrémité du saumon de pale, et est fixée contre cette tranche à l'aide de la ou des vis d'équilibrage. Cependant, cette réalisation impose que les dimensions de la pale et du capuchon soient très précises pour assurer un accostage et un collage corrects des pièces entre elles. Dans une variante simplifiée de la pale selon l'invention, la vis ou chaque vis, éventuellement d'équilibrage, peut fixer contre la tranche d'extrémité du saumon de pale au moins une patte de capuchon, qui prolonge l'une au moins des ailes d'extrados et d'intrados dudit capuchon, et est repliée par rapport auxdites ailes d'extrados et d'intrados du capuchon.

Dans une variante intermédiaire, le capuchon comprend, pour relier ses ailes d'extrados et d'intrados, une nervure partielle d'extrémité, électriquement conductrice, en continuité électrique avec les ailes d'extrados et d'intrados du capuchon, et s'étendant sur une partie, qui est adjacente au bord de fuite, de la section de la tranche d'extrémité du saumon.

Une telle nervure partielle, métallique et résistante, peut être réalisée simplement de différentes manières : à l'aide d'au moins un volet prolongeant l'une des ailes d'extrados et d'intrados du capuchon et replié contre la tranche d'extrémité du saumon, dans sa partie adjacente au bord de fuite, le volet étant également fixé à l'autre des ailes d'extrados et d'intrados du saumon par une liaison électriquement conductrice, par exemple par soudage. La nervure partielle d'extrémité peut aussi comprendre un double volet prolongeant l'une des ailes d'extrados et d'intrados du capuchon, et dont une partie est repliée contre la tranche d'extrémité du saumon, dans sa partie adjacente au bord de fuite, tandis que l'autre partie du volet est contre-coudée et fixée de manière électriquement conductrice, par exemple à l'aide de rivets, contre un autre volet qui prolonge l'autre des ailes d'extrados et d'intrados du capuchon, et qui fait saillie, selon l'envergure, au-delà de la tranche d'extrémité du saumon de pale.

Que la nervure d'extrémité soit complète ou partielle, elle permet d'améliorer la protection à la foudre en respectant sensiblement l'intégrité, selon l'envergure, de la structure composite de la pale, et celle des deux ailes extrados et intrados du capuchon lui-même.

Le capuchon peut être rendu solidaire de la structure composite de la pale à l'aide d'un ancrage mécanique qui peut s'ajouter ou se substituer à une fixation par au moins une vis d'équilibrage, et qui comprend au moins une pièce mince en forme d'ailette, électriquement conductrice, solidaire de la structure composite qu'elle prolonge en saillie, selon l'envergure, vers l'extérieur du saumon de pale.

Si le capuchon comporte une nervure au moins partielle d'extrémité électriquement conductrice et en continuité électrique avec les ailes d'extrados et d'intrados du capuchon, il est alors avantageux que cette nervure soit percée d'au moins une fente, traversée par au moins une ailette conductrice, dont la portion en saillie à l'extérieur de la nervure est repliée au moins en partie contre la nervure, de préférence une moitié de cette portion étant repliée vers l'aile d'extrados et l'autre moitié vers l'aile d'intrados du capuchon, afin de maintenir la nervure appliquée contre la tranche d'extrémité de la pale.

Si le capuchon ne comporte pas de nervure, mais si ses ailes d'extrados et d'intrados sont prolongées chacune par l'une respectivement d'au moins deux pattes en regard, ces pattes peuvent être repliées contre la tranche d'extrémité du saumon de pale et leurs parties d'extrémité libre contre-coudées et fixées, par collage de préférence conducteur et/ou par rivetage ou vissage, contre deux faces opposées d'au moins une ailette conductrice.

Un intérêt de cette liaison, de préférence collée et rivetée, incorporant au moins une ailette conductrice non repliée et restant en débordement par rapport à l'extrémité de la pale, est que la protubérance métallique ainsi réalisée avec les parties de pattes fixées à l'ailette constitue un point d'entrée ou de sortie privilégié pour la foudre, et qui protège ainsi les revêtements composites adjacents d'un impact direct de la foudre sans pour autant perturber l'écoulement aérodynamique, car cette protubérance est placée vers le bord de fuite plutôt que vers le bord d'attaque de la pale. Ce débordement peut, de plus, servir de repère de marquage pour le réglage dynamique, appelé "track", du rotor.

De plus, les deux variantes qui précèdent sont avantageusement compatibles avec un montage du capuchon sur la pale composite par translation dans le sens longitudinal (selon l'envergure) du capuchon déplacé vers le pied de pale. Ces variantes permettent également d'avoir un ancrage mécanique du capuchon sur la pale dans le cas d'une tranche mince, à faible corde, dans laquelle une vis en extrémité ne peut être mise en place, de sorte que la trappe d'accès aux masses d'équilibrage est par exemple disposée sur l'extrados.

Pour que la tenue et la qualité de la protection procurée par le capuchon soient assurées, en cas de décollement du saumon de pale, sur toute la corde de ce dernier, les moyens mécaniques de fixation avantageusement comprennent également au moins un rivet fixant l'une au moins des ailes d'extrados et d'intrados du capuchon contre l'une au moins desdites ailes d'extrados et d'intrados de ladite coiffe ou du cavalier intermédiaire et/ou contre l'une au moins desdites surfaces d'extrados et d'intrados au niveau du saumon de pale, dans une zone voisine du bord de fuite, et/ou dans une zone voisine du bord d'attaque (entre la coiffe et le capuchon et/ou le cavalier de liaison), et/ou de l'ailette conductrice.

La pale peut avoir un saumon droit, c'est-à-dire dont la tranche d'extrémité s'étend, du bord d'attaque au bord de fuite ou jusqu'à proximité de ce dernier, dans un plan sensiblement perpendiculaire à l'axe longitudinal de la pale, en général situé au quart avant de la corde à partir du bord d'attaque. Mais la pale peut également être munie d'un saumon tronqué sur au moins une partie de la corde, et présentant un bord d'attaque incliné vers le bord de fuite et vers l'extrémité du saumon, ainsi qu'une tranche droite d'extrémité, le bord d'attaque du saumon pouvant être rectiligne et présenter un angle de flèche par rapport au bord d'attaque de la partie courante, ou encore avoir une forme courbe en plan, par exemple parabolique. Dans ce cas, le capuchon présente un bord d'attaque incliné, de même forme que celui du saumon, et le long duquel ses ailes d'extrados et d'intrados sont adjacentes, et de préférence solidaires l'une de l'autre. Un capuchon à bord d'attaque rectiligne incliné en flèche présente l'avantage que ses ailes d'extrados et d'intrados et, selon les cas, son ou ses volets et/ou pattes pliables par rapport aux ailes d'extrados et d'intrados pour la fixation à la tranche d'extrémité du saumon, donne(nt) au capuchon une forme développable, le capuchon pouvant se fixer à l'extrémité de la coiffe pouvant elle-même avoir, de manière connue, une forme développable, ce qui permet de réaliser le blindage métallique en deux pièces distinctes de tôle préalablement découpées aux dimensions requises et ne nécessitant essentiellement qu'un pliage suivi d'un conformage par étirage pour chaque pièce, d'une part pour former les ailes d'extrados et d'intrados de la coiffe, et, d'autre part pour former les ailes correspondantes du capuchon. La fixation du capuchon par des moyens mécaniques sur le saumon et sur la coiffe peut être assurée, comme mentionné ci-dessus, par une ou deux vis n'assurant pas forcément une fonction d'équilibrage ou de fermeture de boîtiers d'équilibrage, et fixant au moins une patte du capuchon contre la tranche d'extrémité du saumon, ainsi que par un ou plusieurs rivets fixant les ailes d'extrados et d'intrados du capuchon sur les ailes d'extrados et d'intrados de la coiffe et/ou la structure composite sous-jacente de la pale dans des zones voisines des bords d'attaque et de fuite.

Les moyens électriquement conducteurs du pied de pale, qui assurent la continuité électrique entre la coiffe et le moyeu, peuvent comprendre, par analogie avec les réalisations classiques précitées de protection de pales contre la foudre, au moins une tresse et/ou un clinquant ou ruban métallique électriquement conducteur s'étendant depuis l'extrémité de la coiffe qui est la plus proche du pied de pale, jusqu'à un point fixe du pied de pale et fixé(e) à ce dernier par collage et/ou rivetage ou vissage. Toutefois, dans une pale selon l'invention, il est avantageux que ces moyens électriquement conducteurs du pied de pale comprennent un prolongement continu de ladite coiffe qui protège une partie dudit pied de pale venant dans le prolongement du bord d'attaque jusqu'à proximité desdits moyens d'attache de la pale, ledit prolongement de la coiffe étant fixé en au moins un point contre ledit pied de pale par des moyens mécaniques de fixation, du type vis ou rivets et/ou par un adhésif éventuellement conducteur. Ces moyens mécaniques de fixation du prolongement de la coiffe contre le pied de pale assurent ainsi la tenue et la qualité de la protection en cas de décollement du blindage au niveau de l'emplanture de la pale.

Lorsque les moyens d'attache de la pale au moyeu ou à un organe de liaison au moyeu comprennent, sur le pied de pale, au moins une douille d'attache métallique et électriquement conductrice, et plus couramment deux douilles parallèles, selon une variante, ledit prolongement continu de la coiffe peut s'étendre avantageusement jusqu'à être en liaison directe avec la ou les douilles d'attache. Ceci rend inutile la présence de plots et/ou tresses de métallisation qui sont utilisés dans les blindages classiques des pales contre la foudre.

Pour d'autres types d'attaches de pale, telles que fourche, lame torsible, mono enroulement, non spécifiquement décrits car bien connus, un prolongement continu analogue est avantageusement réalisé. Ce prolongement conducteur peut être associé ou remplacé par un clinquant ou une tresse de métallisation, une bonne continuité électrique entre le clinquant ou la tresse et la coiffe étant assurée par un collage conducteur associé à un rivetage ou un vissage ou autre moyen mécanique de fixation, de façon à éviter tout phénomène de répulsion. De même, les sections de matière des différents composants conducteurs sont dimensionnées de façon à conserver un écoulement des charges électriques optimal avec le moins de pertes par effet Joule à l'origine d'échauffements et de décollements locaux.

Avantageusement en outre, pour que l'entrée et/ou la sortie de la foudre s'effectue de manière à protéger la structure composite au niveau du saumon de pale, il est avantageux que le capuchon présente au même titre que le volet une extrémité de fuite qui déborde en saillie au-delà du bord de fuite de la pale, pour réaliser un point privilégié d'entrée ou de sortie de la foudre.

Lorsque les fibres de renfort de la structure composite de la pale comprennent des fibres de carbone, il est en outre avantageux que la pale comprenne, au moins entre sa partie courante et la coiffe de bord d'attaque, une coiffe sous-jacente, de préférence diélectrique, telle que composite à matrice synthétique et fibres de renfort en verre, qui isole avantageusement la coiffe de bord d'attaque du matériau composite à fibres de carbone, pour tenir compte du caractère électriquement conducteur de ces fibres, qui rend tout composite les comportant particulièrement sensible à l'endommagement par la foudre.

D'autres avantages et caractéristiques de l'invention ressortiront de la description donnée ci-dessous, à titre non limitatif, d'exemples de réalisation décrits en référence aux dessins annexés sur lesquels :
- la figure 1 est une vue schématique en plan d'une pale de rotor arrière avec blindage de protection contre la foudre,
- la figure 2 représente en élévation latérale l'extrémité du saumon de la pale de la figure 1, à plus grande échelle,
- la figure 3 est une vue partielle analogue à la figure 1 pour une première variante de réalisation, dans la zone d'attache du pied de pale,
- la figure 4 représente partiellement, en plan et à plus grande échelle, uniquement le saumon d'une seconde variante de pale, à l'extrémité droite,
- la figure 5 est une coupe schématique éclatée de la coiffe selon V-V de la figure 4,
- la figure 6 représente schématiquement et partiellement en plan uniquement la partie d'une troisième variante de pale correspondant au pied de pale et à une portion adjacente de la partie courante,
- la figure 7 représente schématiquement en plan une quatrième variante de réalisation,
- les figures 8 et 9 sont des vues analogues respectivement aux figures 4 et 2 pour une cinquième variante de pale,
- les figures 10, 10a, 11, 11a et 11b sont des vues partielles en perspective de cinq variantes de la pale des figures 8 et 9, la variante de la figure llb comportant un cavalier intermédiaire, électriquement conducteur, assurant la continuité électrique entre le capuchon et la coiffe,
- la figure 12 est une vue schématique en coupe partielle selon XII-XII de la figure 11,
- la figure 13 est une vue en plan schématique et partielle d'une autre variante de pale, avec saumon tronqué,
- la figure 14 est une vue schématique en plan d'une pièce de tôle prédécoupée aux cotes d'un capuchon développable pour une pale à saumon en flèche, et
- la figure 15 est une vue analogue à la figure 14 de la tôle de blindage pliée pour former le capuchon de protection.

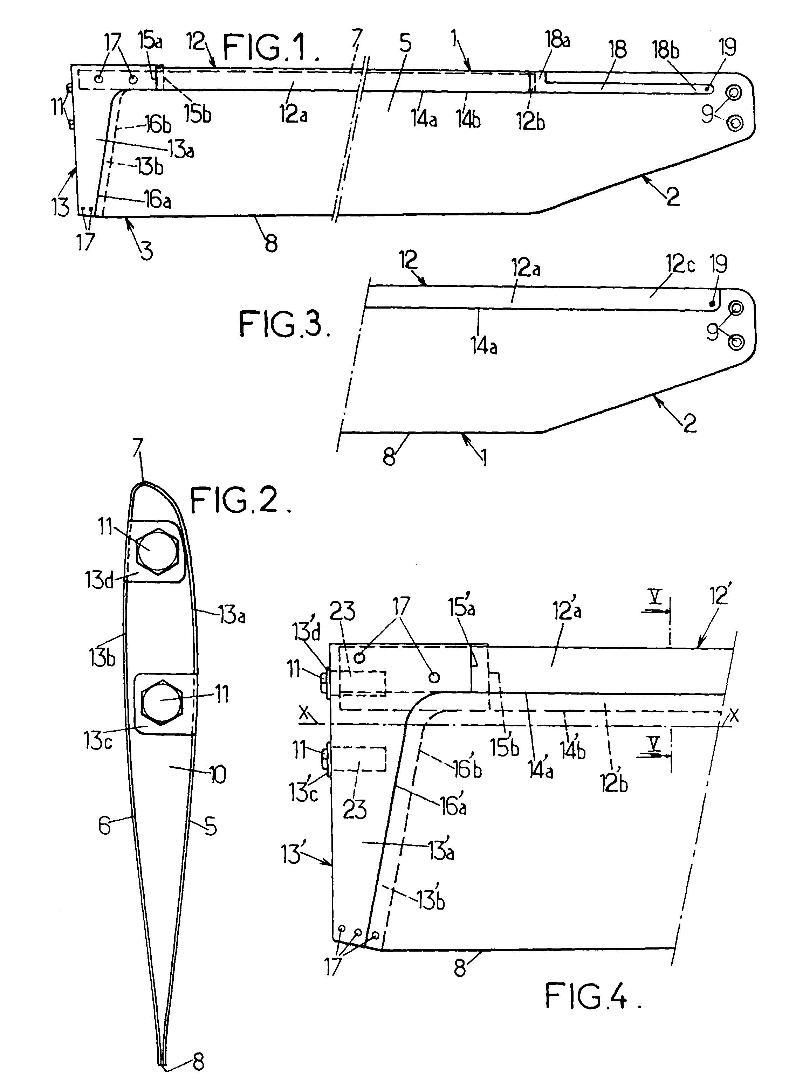

La pale des figures 1 et 2 est une pale de rotor arrière d'hélicoptère, essentiellement constituée d'une structure en matériau composite à matrice synthétique (par exemple une résine thermodurcissable) renforcée de fibres minérales et/ou organiques (par exemple de verre, carbone ou aramides), formant une partie courante 1, profilée au profil aérodynamique souhaité, se prolongeant, à une extrémité destinée à être fixée à un moyeu de rotor, par un pied de pale 2 ayant, dans cet exemple, une forme en plan trapézoïdal, tandis que l'extrémité opposée de la partie courante 1 constitue un saumon de pale 3.

La structure composite de la pale, qui forme sa partie courante 1, et qui peut se prolonger plus ou moins complètement dans le pied de pale 2, peut être toute structure connue, par exemple mono ou multi-longeron en stratifils de fibres unidirectionnelles agglomérées par une résine d'imprégnation, et coopérant avec des surfaces d'extrados 5 et d'intrados 6 constituées de revêtements stratifiés de couches de fibres agglomérées par la résine (par exemple des tissus de fibres ou nappes de fibres), pour constituer une structure mono ou multi-caisson éventuellement remplie, entre le ou les longerons et les revêtements stratifiés d'extrados et d'intrados, de corps de remplissage en mousse synthétique.

La figure 1 montre que la partie courante profilée 1 de la pale présente une forme en plan sensiblement rectangulaire, de sorte que les bords d'attaque 7 et de fuite 8, entre lesquels s'étendent, selon la corde de la pale, les surfaces d'extrados et d'intrados 5 et 6, sont sensiblement parallèles l'un à l'autre.

Par la grande base de sa forme en plan en trapèze rectangle, le pied de pale 2 est adjacent à la partie courante 1 et présente, à ce niveau, une corde égale à celle sensiblement constante de la partie courante 1, sauf au niveau du saumon de pale 3 où la corde diminue légèrement de valeur. Du côté de sa petite base, c'est-à-dire du côté destiné à être tourné vers le moyeu du rotor, le pied de pale 2 comporte des moyens d'attache de la pale, constitués (figures 1, 3, 6 et 7) de deux douilles 9 métalliques et électriquement conductrices, parallèles, et traversant le pied de pale 2 dans son épaisseur perpendiculairement au plan de la figure 1. Ces deux douilles 9 permettent, de manière connue, le rattachement de la pale, à l'aide de deux axes les traversant, par exemple dans une chape d'extrémité radiale externe (par rapport à l'axe de rotation du moyeu) d'un organe métallique de liaison de la pale au moyeu, lequel organe peut être, de manière connue, constitué dans sa partie centrale en manchon et comporter une partie d'extrémité radiale interne également en chape reliée au moyeu par des moyens de retenue et d'articulation, tels qu'une butée sphérique lamifiée, selon un montage bien connu, qui ne nécessite pas d'être davantage décrit ni représenté.

D'autres types connus d'attaches de pale (fourche, lame torsible, mono enroulement, etc..) sont compatibles avec l'adaptation d'une coiffe et d'un capuchon d'extrémité tels que décrits ci-dessous pour la protection de la pale contre la foudre.

De manière également connue, la structure de la pale présente, dans le saumon de pale 3, des boîtiers ou logements (tels que représentés en 23 sur la figure 4) de masses d'équilibrage et/ou de réglage dynamique qui s'ouvrent dans la tranche d'extrémité 10 (voir figure 2) du saumon de pale 3, pour l'introduction ou le retrait desdites masses, et qui sont fermés par deux vis 11, constituant elles-mêmes des masses d'équilibrage, et qui se vissent dans la moitié de cette tranche 10 qui est voisine du bord d'attaque 7. Plus généralement, ces boîtiers peuvent être situés soit vers l'extrados soit vers l'intrados de la pale et accessibles par des trappes d'accès dans l'extrados ou l'intrados du profil en zone d'extrémité.

La pale ci-dessus décrite est protégée contre la foudre par un blindage, qui comprend essentiellement deux pièces métalliques et électriquement conductrices, réalisées en acier inoxydable ou par étirage et conformation de deux tôles de titane, ou plus généralement tout autre matériau métallique bon conducteur de l'électricité (nickel électroformé, par exemple) et non fragile vis-à-vis de l'érosion au sable et à la pluie, et qui sont, d'une part, une coiffe 12 de protection du bord d'attaque 7 de la partie courante 1, et, d'autre part, un capuchon 13 coiffant le saumon de pale 3 en s'étendant sur toute la corde de ce dernier, et chevauchant non seulement le saumon 3 de son bord d'attaque à son bord de fuite mais également l'extrémité de la coiffe 12 ou d'un cavalier de liaison profilé intermédiaire assurant la continuité électrique entre la coiffe et le capuchon (cavalier interne ou externe à la coiffe) qui s'étend sur le saumon 3. La coiffe 12, analogue aux coiffes classiques de protection du bord d'attaque des pales contre l'érosion, et assurant effectivement cette protection contre l'érosion, présente une section transversale sensiblement en U, définie par une aile d'extrados 12a et une aile d'intrados 12b, qui sont adjacentes l'une à l'autre le long du bord d'attaque 7 recouvert par la coiffe 12, et qui s'étendent respectivement sur des parties, adjacentes à ce bord d'attaque 7, des surfaces d'extrados 5 et d'intrados 6 de la partie courante 1, auxquelles la coiffe 12 est solidarisée par collage, à l'aide de tout adhésif approprié, de préférence électriquement conducteur.

Les ailes 12a et 12b ont sensiblement la même largeur, mesurée selon la corde et selon l'envergure malgré la dissymétrie du capuchon 13, comme décrit ci-dessous, de sorte que les ailes 12a et 12b de la coiffe 12 sont sensiblement symétriques l'une de l'autre par rapport au plan de corde de la pale.

Le capuchon 13, qui recouvre le saumon de pale 3 jusqu'au bord de fuite 8 ainsi que l'extrémité de la coiffe 12 ou d'un cavalier conducteur de liaison profilé, intermédiaire entre la coiffe et le capuchon, qui protège le bord d'attaque du saumon 3, comprend une aile d'extrados 13a qui, dans sa zone voisine du bord d'attaque 7, chevauche l'aile d'extrados 12a de la coiffe 12 ou du cavalier intermédiaire et la prolonge selon l'envergure, et qui, en arrière de cette zone, s'étend selon la corde, avec une forme en plan sensiblement trapézoïdale, jusqu'au bord de fuite 8. Le capuchon 13 comprend également une aile d'intrados 13b, qui, de manière similaire, a une zone avant, voisine du bord d'attaque 7, chevauchant et prolongeant l'aile d'intrados 12b de la coiffe 12 ou du cavalier intermédiaire selon l'envergure, et une zone arrière qui s'étend selon la corde en étant sensiblement de même forme trapézoïdale que la zone arrière de l'aile d'extrados 13a. Mais les zones avant et arrière de l'aile d'intrados 13b sont respectivement plus larges, selon l'envergure et à partir de la tranche d'extrémité, que les zones avant et arrière de l'aile d'extrados 13a. Les bords internes 15a et 15b (tournés vers le pied de pale 2) des zones avant des ailes d'extrados et d'intrados 13a et 13b du capuchon 13 chevauchent respectivement les ailes d'extrados et d'intrados 12a et 12b de la coiffe 12 ou du cavalier intermédiaire, sensiblement perpendiculairement au bord d'attaque 7, et jusqu'au bord arrière 14a ou 14b de cette aile 12a ou 12b, et se raccordent respectivement aux bords internes 16a et 16b, s'étendant sur les surfaces d'extrados 5 et d'intrados 6, des zones arrière des ailes d'extrados et d'intrados 13a et 13b du capuchon 13 par une partie concave, à concavité tournée vers le bord de fuite 8 et arrondie avec un rayon de raccordement. Ces parties concaves se raccordent aux bords 15a et 15b par des segments superposés aux bords arrière 14a et 14b des ailes 12a et 12b de la coiffe qui les prolongent vers le pied de pale 2. Les bords internes 16a et 16b des zones arrière des ailes 13a et 13b du capuchon 13 sont sensiblement rectilignes et parallèles l'un à l'autre, en étant décalés l'un de l'autre selon l'envergure de la pale du fait que l'aile d'intrados 13b est plus large, selon l'envergure, que l'aile d'extrados 13a, en tout point pris le long de la corde. Chacune des ailes 13a et 13b du capuchon 13 présente une largeur, selon l'envergure, qui est supérieure à la largeur, selon la corde, de l'aile 12a ou 12b de la coiffe 12 à laquelle elle se raccorde, dans sa zone avant voisine du bord d'attaque 7, pour faciliter, dans cette zone, le passage du courant de foudre selon l'envergure comme selon la corde. De plus, chaque aile 13a et 13b a une largeur, selon l'envergure, qui diminue progressivement de sa zone voisine du bord d'attaque 7 juqu'au bord de fuite 8. Cependant, dans leur zone voisine du bord de fuite, les ailes 13a et 13b conservent une largeur suffisante, selon l'envergure, pour que chacune des ailes 13a et 13b puisse être fixée à la partie sous-jacente de la structure composite de la pale par au moins un, voire deux rivets 17 au minimum. De même, dans sa zone avant, chaque aile d'extrados 13a ou d'intrados 13b du capuchon 13 est fixée par deux rivets 17 à la partie qu'elle recouvre respectivement de l'aile d'extrados 12a ou d'intrados 12b de la coiffe 12 ou du cavalier intermédiaire, ainsi qu'à la structure composite sous-jacente de la pale.

Comme montré sur la figure 2, le capuchon 13 comprend également deux pattes 13c et 13d qui sont dans le prolongement, la première 13c, de la zone médiane, selon la corde, de l'aile d'extrados 13a du capuchon 13, et, la seconde 13d, de la zone voisine du bord d'attaque 7 de l'aile d'intrados 13b du capuchon 13, ces deux pattes 13c et 13d étant repliées par rapport à ces ailes 13a et 13b et appliquées contre la tranche d'extrémité 10 du saumon de pale 3, sur lequel chacune des deux pattes 13c et 13d est fixée par l'une respectivement des deux vis 11 d'équilibrage. Ainsi, les pattes 13c et 13d du capuchon 13 sont en contact direct, et donc en continuité électrique, avec ces vis 11 métalliques et électriquement conductrices, dont les têtes font saillie à l'extérieur de la tranche d'extrémité 10 du saumon de pale 3, et dont les tiges sont engagées dans la structure composite environnante de la partie courante de la pale 1.

Avant la pose des vis 11 et des rivets 17, la coiffe 12 et le capuchon 13 sont collés à chaud ou encore à froid ou à tiède à la structure composite de la pale, soit simultanément à la polymérisation de la matrice de cette structure composite, par une opération de co-cuisson, soit postérieurement à cette polymérisation. La cohésion du capuchon 13 avec le saumon de pale 3 est assurée à l'aide d'une colle, de préférence électriquement conductrice dans la zone de contact avec la coiffe 12 du bord d'attaque ou le cavalier intermédiaire, collant ses ailes 13a et 13b contre les surfaces d'extrados et d'intrados 5 et 6, et ses pattes 13c et 13d contre la tranche d'extrémité 10 du saumon 3.

Les vis 11 et rivets 17 complètent la fixation par simple collage du capuchon 13 sur la structure composite de la pale et assurent ainsi la tenue et la qualité de la protection métallique du saumon de pale 3 en cas de décollement, à ce niveau, entre le capuchon 13 et la structure composite de la pale, que ce décollement résulte des forces centrifuges et/ou aérodynamiques, lors de la rotation du rotor, ou d'un foudroiement de la pale, développant des forces répulsives sur les ailes 13a et 13b du capuchon 13. Comme ces ailes 13a et 13b sont dissymétriques du fait de leur largeur différente, selon l'envergure, l'aile d'intrados 13b la plus large est moins sollicitée par ces forces répulsives, et le capuchon 13 est relativement protégé contre les décollements de ses ailes 13a et 13b. Grâce aux pattes 13c et 13d ainsi qu'aux ailes d'extrados et d'intrados 13a et 13b du capuchon 13, les vis 11 et les rivets 17 métalliques et électriquement conducteurs sont mis à la masse, pour éviter les dommages pouvant être occasionnés à la structure composite environnante, entourant ces vis 11 et rivets 17, en cas de foudroiement, le courant de foudre étant évacué par le capuchon 13 et la coiffe 12, mise en continuité électrique avec le capuchon 13 par la partie avant de ce dernier qui chevauche la coiffe 12 et est fixée en contact avec la coiffe 12 par les rivets 17, puis vers le moyeu par des moyens décrits ci-dessous. Il faut noter qu'en raison de leurs formes protubérantes, les vis 11 et rivets 17 constituent des points prédéterminés d'impacts ou de sortie de la foudre, et protègent ainsi la structure composite environnante de la pale.

La mise à la masse du blindage constitué de la coiffe 12 et du capuchon 13, ainsi que des vis 11 et rivets 17, qui sont tous des éléments électriquement conducteurs, est assurée par un ruban 18 métallique, électriquement conducteur, qui s'étend sur la surface d'extrados du pied de pale 2 en étant solidaire, par une extémité 18a, de l'extrémité de la coiffe 12 du côté du pied de pale 2, et fixé, par son autre extrémité 18b et à l'aide d'une vis ou d'un rivet 19, sur le pied de pale 2 à proximité immédiate des douilles d'attache 9, de sorte qu'après le montage de la pale dans la chape réceptrice du manchon de liaison au moyeu, le ruban conducteur 18 est en continuité électrique par son extrémité 18b avec des pièces métalliques et électriquement conductrices du manchon de liaison au moyeu et du moyeu. Un ruban conducteur tel que 18 peut être monté de manière similaire sur la surface d'extrados ou d'intrados du pied de pale 2.

La variante de la figure 3 ne se distingue de l'exemple décrit ci-dessus en référence aux figures 1 et 2 que par les moyens assurant la mise à la masse du blindage au niveau du pied de pale 2. A cet effet, le ruban conducteur 18 de la figure 1 est supprimé et remplacé avantageusement par un prolongement continu 12c de la coiffe 12 de bord d'attaque, qui s'étend sur le bord d'attaque du pied de pale 2, dans le prolongement du bord d'attaque de la partie courante 1, et de sorte que l'extrémité de la coiffe 12, du côté opposé au capuchon 13, est fixée à proximité immédiate des deux douilles d'attache 9 par une vis ou un rivet 19 dans chacune des ailes d'extrados et d'intrados de la coiffe 12 prolongée. Ces vis ou rivets assurent, au niveau du pied de pale 2, la tenue et la qualité de la protection métallique en cas de décollement à ce niveau entre le prolongement 12c de la coiffe 12 et la structure sous-jacente, au moins partiellement composite, du pied de pale 2.

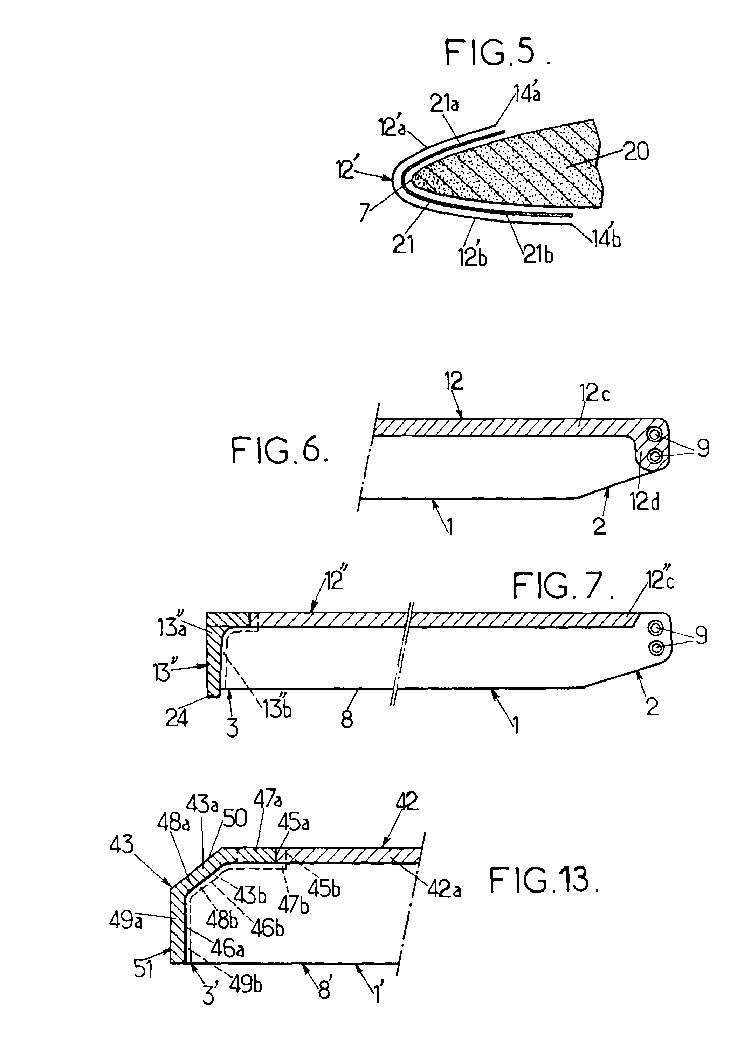

Selon l'autre variante de la figure 6, le prolongement 12c de la coiffe 12, qui recouvre tout le bord d'attaque du pied de pale 2, se prolonge lui-même, du côté de l'extrados, par une plaque d'extrémité 12d, et, de préférence également du côté de l'intrados, par une plaque d'extrémité analogue (non représentée), et les deux plaques telles que 12d sont en contact direct avec les douilles d'attache 9. Ces douilles 9 participent ainsi à la mise à la masse du blindage de protection contre la foudre. Le passage du courant de foudre est ainsi assuré, depuis le capuchon 13, par la coiffe 12 et son prolongement 12c de pied de pale 2, puis par les plaques telles que 12d, les douilles d'attache 9, les axes de fixation de ces douilles dans la chape radiale externe du manchon de liaison au moyeu, et ensuite par ce manchon et jusqu'aux parties métalliques du moyeu.

La variante des figures 4 et 5 se distingue des exemples décrits précédemment par plusieurs différences d'importance inégale. La plus importante est que la coiffe 12' a une aile d'intrados 12'b plus large, selon la corde, que son aile d'extrados 12'a. Le bord arrière 14'b de l'aile 12'b est donc décalé vers le bord de fuite 8 par rapport au bord arrière 14'a de l'aile d'extrados 12'a. Les bords internes 15'a et 16'a des zones avant et arrière de l'aile d'extrados 13'a du capuchon 13' sont parallèles respectivement aux bords internes 15'b et 16'b des zones avant et arrière de l'aile d'intrados 13'b du capuchon 13', mais décalés selon l'envergure, et la partie concave raccordant le bord interne 16'a au bord interne 15'a, qui chevauche l'aile d'extrados 12'a de la coiffe 12' ou d'un cavalier conducteur profilé intermédiaire entre coiffe 12' et capuchon 13', est prolongée par le bord arrière 14'a de cette aile d'extrados 12'a, tandis que la partie concave raccordant le bord interne 16'b au bord interne 15'b, qui chevauche l'aile d'intrados 12'b de la coiffe 12' ou du cavalier intermédiaire, est prolongée par le bord arrière 14'b de l'aile d'intrados 12'b.

Dans cette variante, la dissymétrie, par rapport au plan de corde de la pale, entre les ailes d'extrados 12'a et 13'a et d'intrados 12'b et 13'b de la coiffe 12' et du capuchon 13', résultant de leurs dimensions différentes selon la corde et/ou selon l'envergure de la pale, est une caractéristique particulièrement favorable, dont les conséquences sont décrites ci-dessous en référence à la figure 5 pour la coiffe 12'.

En cas de foudroiement de la pale, si le courant de foudre se déplace de l'un des bords arrière 14'a et 14'b vers l'autre en passant par le bord d'attaque de la coiffe 12', il apparaît sur les ailes 12'a et 12'b des forces répulsives, d'origine magnétique, issues des composantes antagonistes du vecteur de courant, et qui sont d'autant plus importantes que l'intensité du courant est élevée et que le rayon de courbure de la coiffe 12' est faible. Ces forces répulsives tendent à écarter les ailes 12'a et 12'b l'une de l'autre, et donc à les arracher de la structure composite repérée dans son ensemble en 20 sur la figure 5, et sur laquelle ces ailes 12'a et 12'b sont collées, comme mentionné ci-dessus. Par contre, lorsque le courant de foudre se déplace du bord d'attaque de la coiffe 12 sur chaque aile 12'a et 12'b vers le bord arrière 14'a ou 14'b de cette aile, les forces qui se développent sur les ailes 12'a et 12'b tendent à les resserrer l'une vers l'autre, ce qui produit un effet favorable à la cohésion de la coiffe 12' sur la structure composite 20.

Lorsque les deux ailes de la coiffe ont la même largeur, selon la corde, les forces répulsives se développant dans le cas mentionné ci-dessus produisent un effet défavorable à la cohésion de la coiffe sur la structure composite, puisqu'elles tendent à décoller préférentiellement les ailes d'intrados et d'extrados de cette coiffe.

Par contre, sur la figure 5, comme l'une 12'b des ailes de la coiffe 12' a une largeur (selon la corde) supérieure à celle de l'autre 12'a, il en résulte sur l'aile la plus large 12'b une zone favorable, délimitée entre son bord arrière 14'b et la projection sur l'aile 12'b du bord arrière 14'a de l'autre aile 12'a, et grâce à laquelle les forces répulsives sollicitant la zone défavorable délimitée entre le bord d'attaque de la coiffe 12' et le bord arrière 14'a ou sa projection sur l'aile 12'b, ne sont pas suffisantes pour provoquer un décollement local des ailes 12'a et 12'b, en particulier de l'aile la plus large 12'b.

Dans cette réalisation, dans laquelle l'aile d'intrados 12'b est la plus large, l'aile d'extrados 12'a est plus sollicitée que l'aile d'intrados 12'b, laquelle assure simultanément une meilleure tenue à l'érosion à la pluie et au sable.

En variante, il est bien entendu possible de donner à l'aile d'extrados 12'a une largeur supérieure à celle de l'aile d'intrados 12'b. Dans ce cas, on obtient une excellente adhérence au niveau du bord arrière 14'a, le plus reculé vers le bord de fuite, de l'aile d'extrados 12'a, qui est moins sollicitée que l'aile d'intrados 12'b, la grande largeur de l'aile d'extrados 12'a ayant simultanément pour effet d'assurer un meilleur écoulement aérodynamique à l'extrados de la pale, si le capuchon 13' est rapporté sur le profil aérodynamique d'origine, mais il peut constituer aussi une meilleure protection vis-à-vis d'impacts dûs à la foudre venant de l'extérieur amont de l'aéronef.

Les mêmes phénomènes se produisent sur le capuchon 13', comme d'ailleurs sur le capuchon 13 des variantes décrites ci-dessus, en raison de la dissymétrie de ses ailes d'extrados et d'intrados due à leur différence de largeur selon l'envergure de la pale.

Une autre différence, également décrite en référence à la figure 5, est que, lorsque la structure composite 20 de la pale comprend des fibres de renfort en carbone, qui sont électriquement conductrices alors que la matrice synthétique du matériau composite est isolante, on place sous la coiffe 12' de bord d'attaque, une coiffe 21 sous-jacente diélectrique, pour isoler la structure composite 20 de la pale de sa coiffe 12' conductrice de bord d'attaque. Dans ce cas, la coiffe diélectrique sous-jacente ou sous-coiffe 21 peut être réalisée avantageusement en matériau composite avec la même matrice synthétique que le reste de la structure composite 20 de la pale et des fibres de renfort en verre, et avoir des ailes d'extrados 21a et d'intrados 21b au moins aussi larges, selon la corde, que les ailes d'extrados 12'a et d'intrados 12'b respectivement de la coiffe 12', la cohésion de la sous-coiffe 21 avec la structure composite 20 étant assurée par la polymérisation de cette structure 20.

Lorsque la structure composite de la pale ne comporte que des fibres de renfort en verre ou aramides, non électriquement conductrices, il est préférable de prévoir une telle sous-coiffe diélectrique, pour isoler le revêtement travaillant de la pale vis-à-vis d'autres impératifs ou d'autres équipements installés tels que des dégivreurs de pale.

Une autre différence est que l'aile d'intrados 13'b du capuchon 13' est, dans sa zone voisine du bord de fuite 8, suffisamment large (selon l'envergure) pour être fixée à la structure composite sous-jacente de la pale par trois rivets 17, alors que la zone de l'aile d'extrados 13'a voisine du bord de fuite 8 est fixée par deux rivets 17, comme dans les exemples précédents. De plus, chacune des ailes d'extrados 13'a et d'intrados 13'b est également fixée, dans sa zone avant, voisine du bord d'attaque, à la partie qu'elle chevauche de l'aile d'extrados 12'a ou d'intrados 12'b de la coiffe 12' et à la structure composite sous-jacente par deux autres rivets 17.

Le bord interne 15'a de la partie avant de l'aile d'extrados 13'a du capuchon 13' chevauchant et prolongeant, selon l'envergure de la pale, l'aile d'extrados 12'a de la coiffe 12' ou du cavalier intermédiaire, peut définir un redan en saillie sur la surface d'extrados du blindage de protection, dans le sens allant de la coiffe 12' au capuchon 13'. Selon la corde, ce redan s'étend sur toute la largeur de l'aile d'extrados 12'a de la coiffe 12'. Le bord interne 15'b de l'aile d'intrados 13'b du capuchon 13' forme de la même manière un redan analogue sur l'aile d'intrados 12'b de la coiffe 12'. Ces redans correspondent à une augmentation d'épaisseur du blindage dans sa zone voisine du bord d'attaque du saumon 3. Les ailes 13'a et 13'b du capuchon 13', ou l'une d'elles seulement, peuvent ou peut être surépaissie(s) localement dans une partie arrière et/ou dans une partie avant, éventuellement à l'extérieur, selon l'envergure, de l'extrémité de la coiffe 12' sous le capuchon 13', pour compenser au moins partiellement l'épaisseur de la coiffe 12' et, le cas échéant, du cavalier intermédiaire dans ses parties recouvertes par le capuchon 13'. L'augmentation de masse qui en résulte permet de recentrer la pale par rapport à son axe longitudinal de changement de pas X-X, au quart avant selon la corde à partir du bord d'attaque. De plus, le blindage du saumon 3 est ainsi plus résistant à l'érosion, compte tenu qu'il est exposé, en rotation, à une vitesse relative plus importante. Cette compensation peut s'effectuer directement, en variante, par variation des positions des masses internes aux boîtiers d'équilibrage ou indirectement en intégrant un contrepoids dans la structure avant de la pale (déplacement des masses, de préférence de l'arrière vers l'avant). Ces dispositifs permettent l'un comme l'autre de s'affranchir de la présence d'un redan défavorable pour les performances aérodynamiques. Toutefois, un compromis doit être trouvé concernant les dimensions et l'épaisseur du capuchon 13', car pour modifier le moins possible l'équilibrage du rotor d'origine ou en cas de perte d'un capuchon 13' et pour minimiser la masse globale d'une pale, il est préférable que la masse du capuchon 13' soit faible, et donc aussi ses dimensions et son épaisseur.

Pour le reste on retrouve, dans cette variante, les deux vis 11 d'équilibrage fermant des logements, schématisés en 23, de masses d'équilibrage et/ou de réglage dynamique fixant simultanément des pattes 13'd et 13'c du capuchon 13' contre la tranche d'extrémité du saumon de pale 3, comme décrit ci-dessus en référence à la figure 2.

Une pale selon la variante des figures 4 et 5, avec un blindage dont la coiffe 12' et le capuchon 13' ont des ailes d'intrados 12'b et 13'b de plus grandes dimensions que les ailes d'extrados 12'a et 13'a, est particulièrement appropriée à un rotor arrière classique d'hélicoptère, dont le sens de rotation et la position, par rapport au carénage rigide arrière ou au pylône arrière de support du rotor, sont tels que l'intrados des pales est tourné vers l'extérieur par rapport au pylône, également revêtu d'un bord d'attaque métallique et électriquement conducteur, mis à la masse pour le passage du courant de foudre.

La variante de la figure 7 se distingue essentiellement de l'exemple des figures 1 et 2 par la présence d'un point privilégié d'entrée ou de sortie de la foudre sur le capuchon 13". En effet, les ailes d'extrados 13"a et d'intrados 13"b de ce capuchon 13" sont chacune prolongées et se rejoignent en saillie au-delà du bord de fuite 8 de la pale, de sorte à réaliser une extrémité de fuite 24 du capuchon 13". Cette extrémité de fuite 24 déborde en saillie au-delà du bord de fuite 8 de la pale, pour constituer ledit point privilégié d'entrée ou de sortie de la foudre. Les ailes 13"a et 13"b du capuchon 13" ont des dimensions différentes selon l'envergure, sauf dans leur extrémité arrière formant l'extrémité 24, car cette dernière est à l'arrière de la corde du saumon de pale 3. Par contre la coiffe 12" a des ailes d'extrados et d'intrados de mêmes dimensions selon la corde et l'envergure, et donc sensiblement symétriques l'une de l'autre. Bien que non représentés, cette variante comporte également des vis et rivets de fixation du capuchon 13" sur la partie sous-jacente de la structure composite de la pale et, dans sa zone avant, sur les parties qu'il recouvre de la coiffe 12". La coiffe 12" s'étend, selon l'envergure de la pale, avec un prolongement continu 12"c, sensiblement comme dans l'exemple de la figure 3, qui recouvre le bord d'attaque du pied de pale 2 jusqu'à proximité immédiate des douilles 9 d'attache.

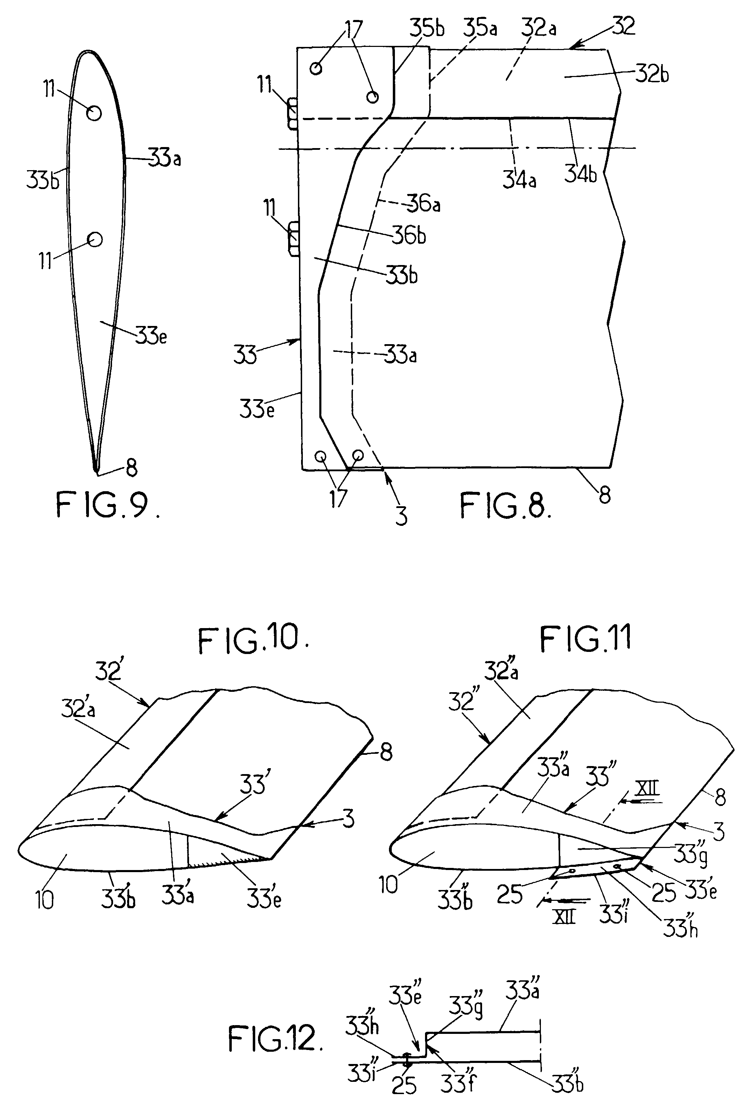

Dans la variante des figures 8 et 9, les ailes d'extrados 33a et d'intrados 33b du capuchon 33 sont reliées l'une à l'autre en continu, du bord d'attaque au bord de fuite, par une nervure d'extrémité 33e du capuchon 33 (voir figure 9). Cette nervure 33e est dans le même métal électriquement conducteur que les ailes 33a et 33b, et elle s'étend contre toute la section de la tranche d'extrémité du saumon de pale 3, dont la partie d'extrémité est ainsi totalement recouverte par le capuchon 33. La nervure 33e est fixée contre la tranche d'extrémité du saumon qu'elle recouvre par deux vis 11 qui, comme sur les figures 2 et 4, peuvent être des vis d'équilibrage et/ou de fermeture de logements de masses d'équilibrage et/ou de réglage dynamique (tels que représentés en 23 sur la figure 4). Comme sur les figures 1, 3, 6 et 7 on retrouve que les ailes d'extrados 32a et d'intrados 32b de la coiffe 32 ont la même largeur, selon la corde, mais dans cette variante, à la différence des exemples précédents, l'aile d'extrados 33a du capuchon 33 est plus large selon l'envergure que l'aile d'intrados 33b pour privilégier un bon écoulement aérodynamique sur l'extrados du saumon de pale 3. On retrouve également que les contours des bords internes 35a et 35b et 36a et 36b des parties avant et arrière des ailes du capuchon 33 sont parallèles et décalés l'un de l'autre selon l'envergure de la pale, et que les bords internes 35a et 35b des parties avant des ailes 33a et 33b chevauchent les ailes correspondantes 32a et 32b de la coiffe 32 ou d'un cavalier de liaison intermédiaire jusqu'à leur bord arrière respectif 34a ou 34b en étant rectilignes et sensiblement perpendiculaires au bord d'attaque. Mais, dans cet exemple, les bords internes 36a et 36b des parties arrière des ailes 33a et 33b ne sont pas rectilignes depuis leur partie concave avec rayon de raccordement au bord interne 35a ou 35b correspondant jusqu'au bord de fuite. Ces bords 36a et 36b sont constitués chacun d'une succession de quatre segments sensiblement rectilignes, dont le premier, vers le bord arrière 34a ou 34b de la coiffe 32, est très incliné de façon à correspondre à une diminution rapide de la largeur de l'aile 33a ou 33b correspondante en se déplaçant selon la corde vers le bord de fuite, et dont le second, à la suite du premier, est moins incliné que le premier pour correspondre à une diminution moins rapide de la largeur des ailes 33a et 33b. Le troisième segment des bords 36a et 36b est sensiblement parallèle à la nervure d'extrémité 33e et délimite ainsi une portion des ailes 33a et 33b de largeur constante (selon l'envergure). Enfin, le quatrième segment, dans la zone des ailes 33a et 33b qui est ajdacente directement au bord de fuite 8, est incliné dans le sens qui augmente la largeur des ailes 33a et 33b jusqu'au bord de fuite 8. Cette augmentation de largeur permet, dans les zones des ailes 33a et 33b qui sont voisines du bord de fuite 8, de disposer de suffisamment de matière pour la fixation de ces parties à la structure composite sous-jacente de la pale par au moins un rivet 17. Malgré cette augmentation de largeur à proximité du bord de fuite 8, les ailes 33a et 33b du capuchon 33 restent d'une plus grande largeur dans leur zone avant, adjacente au bord d'attaque, que dans leur zone adjacente au bord de fuite, et, à proximité du bord d'attaque, ces ailes 33a et 33b sont d'une largeur supérieure à la largeur (selon la corde) respectivement des ailes d'extrados 32a et d'intrados 32b de la coiffe 32. Ainsi, dans les zones voisines du bord d'attaque, les ailes 33a et 33b peuvent chacune être fixée à la partie de l'aile 32a ou 32b de la coiffe 32 ou du cavalier intermédiaire qu'elle recouvre et à la structure composite sous-jacente de la pale par deux rivets 17 en plus d'un collage conducteur. Les vis 11 et rivets 17 assurent un bon accostage du capuchon 33 sur le saumon de pale 3 et sur l'extrémité externe de la coiffe 32 et/ou du cavalier intermédiaire, en particulier sur la tranche d'extrémité du saumon 3 et sur les zones voisines du bord d'attaque ainsi que les zones du saumon 3 voisines du bord de fuite. De plus, ces vis 11 et rivets 17 assurent, comme dans les exemples précédents, les continuités électriques avec les diverses parties correspondantes du capuchon 33, en complétant les effets du collage fixant également le capuchon 33 sur le saumon de pale 3 et de manière conductrice de préférence sur l'extrémité externe de la coiffe 32 que le capuchon 33 chevauche.

En variante à l'exemple des figures 8 et 9, les quatre segments décrivant les bords 36a et 36b sont remplacés, de façon équivalente, par une courbe passant sensiblement par les différents points de raccordement des segments entre-eux, dès lors que la surface de matière conductrice formant le capuchon 33 est, en moyenne, inchangée selon la corde.

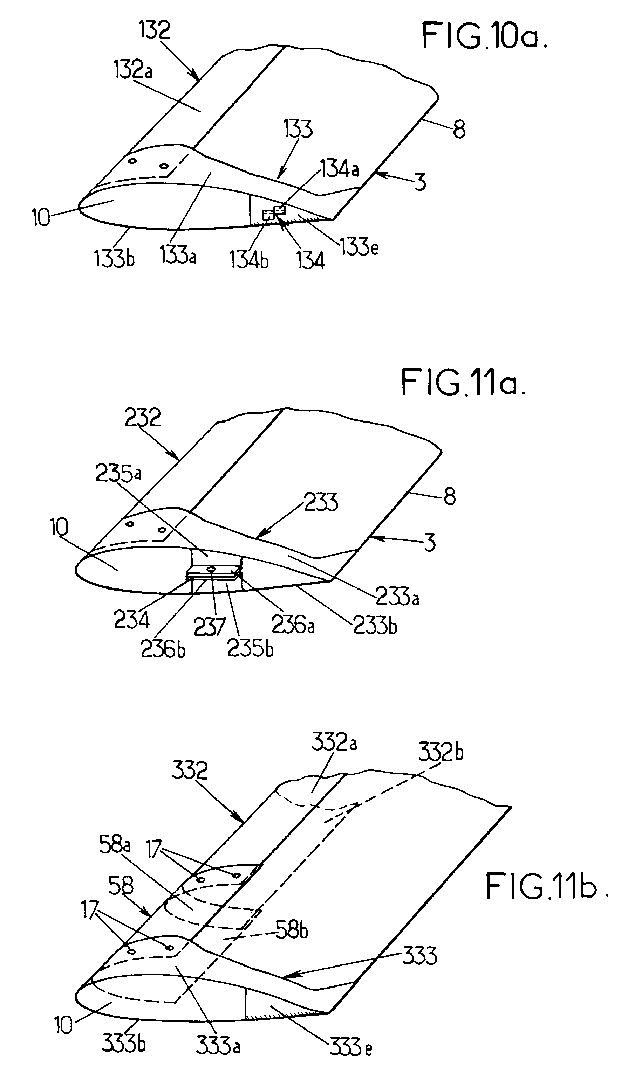

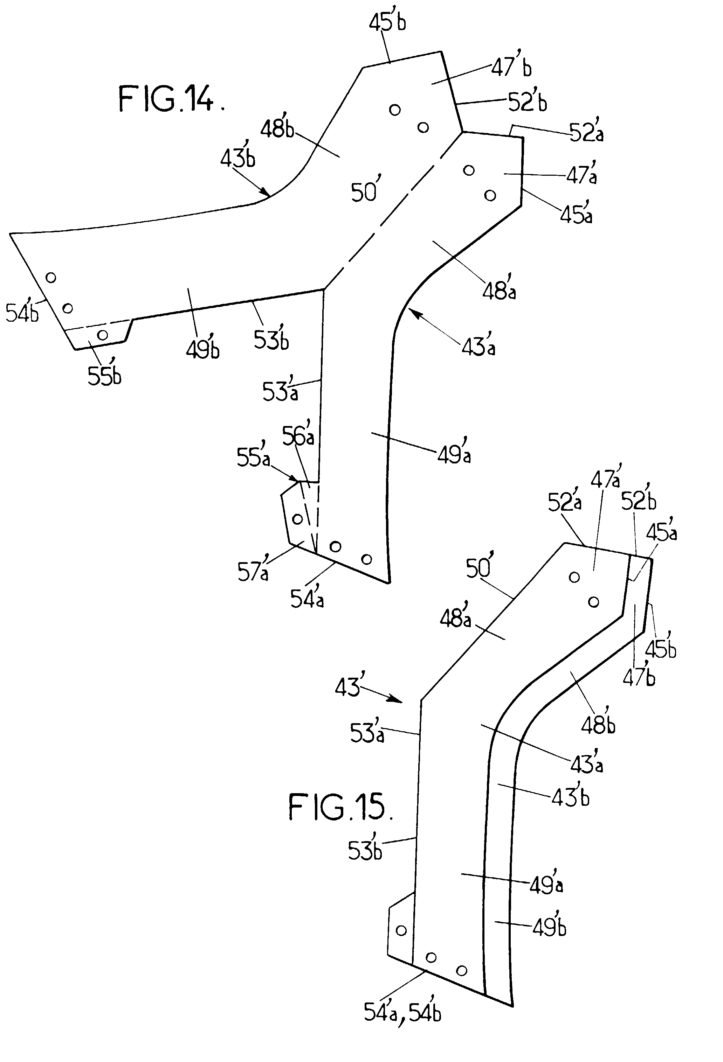

Pour ne pas avoir à réaliser le capuchon 33 d'une seule pièce avec des cotes très précises, nécessaires à un bon accostage et un bon collage de cette pièce rapportée sur la structure composite de la pale, munie de sa coiffe 32, la nervure complète 33e de la variante des figures 8 et 9 peut être remplacée par une nervure partielle, éventuellement adjacente au bord de fuite, comme dans les variantes des figures 10, 10a, 11 et 11a.

Sur la figure 10, la nervure partielle d'extrémité 33'e s'étend entre les ailes d'extrados 33'a et d'intrados 33'b du capuchon 33' rapporté en étant uniquement appliquée contre la partie de la section de la tranche d'extrémité 10 du saumon 3 qui est adjacente au bord de fuite 8 de la pale. Cette nervure partielle 33'e est constituée par un volet prolongeant, dans cet exemple, la partie de l'aile d'extrados 33'a qui est adjacente au bord de fuite 8, et ce volet 33'e est replié par rapport à cette aile 33'a de façon à être appliqué contre la partie arrière de la tranche d'extrémité 10 du saumon 3, le volet 33'e étant de plus soudé, le long de son bord opposé au bord plié, à l'aile d'intrados 33'b, de sorte que la nervure partielle 33'e ainsi réalisée relie les ailes d'extrados 33'a et d'intrados 33'b en étant en continuité électrique avec elles. Pour le reste, les ailes 33'a et 33'b du capuchon 33' ont sensiblement la même forme que celles du capuchon 33 rapporté de la figure 8, et chacune recouvre partiellement l'aile correspondante d'extrados 32'a ou d'intrados de la coiffe 32', dans les mêmes conditions que sur la figure 8, les rivets 17 n'ayant pas été représentés.

Sur la figure 10a, le capuchon 133 est analogue au capuchon 33' de la figure 10 en ce qu'il comporte une nervure partielle d'extrémité 133e conductrice, en continuité électrique avec les ailes d'extrados 133a et d'intrados 133b du capuchon 133 dont la nervure 133e est solidaire et entre lesquelles elle s'étend, le capuchon 133 étant rapporté sur le saumon de pale 3 et en continuité électrique avec la coiffe 132 de bord d'attaque comme dans les exemples précédents. La nervure 133e peut être constituée comme celle 33'e de la figure 10, par un volet solidaire de l'aile d'extrados 133a et replié contre la partie de la tranche d'extrémité 10 qui est adjacente au bord de fuite 8, le bord inférieur de ce volet étant soudé au bord de l'aile d'intrados 133b. La différence essentielle avec l'exemple de la figure 10 est que la nervure 133e est percée d'une fente qui, lorsque l'on vient accoster le capuchon 133 sur le saumon 3, se trouve être traversée par une ailette métallique conductrice 134, solidaire de la structure composite de la pale et en saillie selon l'envergure à l'extérieur de la partie arrière de la tranche d'extrémité 10. Après passage de l'ailette 134 dans la fente de la nervure 133e et engagement du capuchon 133 sur le saumon 3 jusqu'à application de la nervure 133e contre la partie arrière de la tranche d'extrémité 10, la portion de l'ailette 134 en saillie à l'extérieur de la nervure 133e est avantageusement divisée longitudinalement en au moins deux moitiés dont l'une 134a est repliée contre la face externe de la nervure 133e vers l'aile d'extrados 133a et l'autre 134b vers l'aile d'intrados 133b. En variante, la nervure 133e peut être complète. On assure ainsi un ancrage mécanique du capuchon 133 sur la structure composite de la pale par coopération de l'ailette 134 avec la nervure 133e.

La coupe schématique de la figure 12 montre clairement la structure pliée et rivetée de la nervure partielle d'extrémité 33"e de la variante de la figure 11. Cette nervure partielle 33"e comprend un premier volet 33"f, qui est double et prolonge la partie, voisine du bord de fuite 8, de l'aile d'extrados 33"a du capuchon 33" rapporté. Ce premier volet 33"f comprend une première partie 33"g, adjacente à l'aile 33"a et qui est repliée contre la partie arrière de la tranche d'extrémité 10 du saumon de pale 3, et une seconde partie 33"h, qui est pliée par rapport à la première partie 33"g à laquelle elle est adjacente, et la partie 33"h est contre-coudée et appliquée contre un second volet 33"i qui prolonge, au-delà de la tranche d'extrémité 10, selon l'envergure, la partie voisine du bord de fuite sur l'aile d'intrados 33"b du capuchon 33". La seconde partie 33"h du premier volet 33"f est ensuite rivetée, par exemple par deux rivets 25, contre le second volet 33"i, de sorte que l'on obtient une nervure partielle d'extrémité 33"e de section sensiblement en "z", assurant une liaison rigidifiée entre les ailes d'extrados 33"a et d'intrados 33"b et en continuité électrique avec elles. Pour le reste, on retrouve que les ailes d'extrados 33"a et d'intrados 33"b du capuchon 33" ont sensiblement les mêmes formes et chevauchent de la même manière les ailes respectivement d'extrados 32"a et d'intrados de la coiffe 32" que dans l'exemple de la figure 8.

Dans la variante de la figure lla, on retrouve une ailette conductrice 234 solidaire de la structure composite de la pale et en saillie selon l'envergure à l'extérieur de la tranche d'extrémité 10. Mais, à la différence de l'ailette 134 de la figure 10a, l'ailette 234 déborde de la partie centrale de la tranche 10 et s'étend sensiblement dans le plan de corde sans être repliée. Chacune des ailes d'extrados 233a et d'intrados 233b du capuchon 233 rapporté sur le saumon 3 et en continuité électrique avec la coiffe 232 de bord d'attaque, comme dans les exemples précédents, est prolongée du côté de la tranche 10 par l'une respectivement de deux pattes en regard 235a et 235b, dont l'une 235a est une patte d'extrados repliée vers l'aile d'intrados 233b et contre la tranche 10 et dont la partie d'extrémité libre 236a est contre-coudée et appliquée contre la face supérieure (sur la figure 11a) de l'ailette 234, tandis que la patte d'intrados 235b est repliée vers l'aile d'extrados 233a, contre la tranche 10, et sa partie d'extrémité libre 236b est contre-coudée et appliquée contre la face inférieure de l'ailette 234. L'ensemble de l'ailette 234 et des deux parties contre-coudées 236a et 236b est collé par un adhésif de préférence conducteur et riveté par au moins un rivet 237 rendant la liaison davantage conductrice. Cet ensemble en débordement par rapport à la tranche 10 d'extrémité de la pale, et assurant un ancrage mécanique du capuchon 233 sur le saumon de pale 3, constitue un point d'entrée ou de sortie privilégié de la foudre, qui protège la structure composite de la pale contre les impacts directs sans trop perturber l'écoulement aérodynamique, car l'ailette 234 et les pattes 235a et 235b sont placées plus près du bord de fuite 8 que du bord d'attaque de la pale. Cette ailette, lorsqu'elle reste protubérante (c'est-à-dire hors du diamètre théorique du rotor défini par la position de la tranche d'extrémité du saumon par rapport au centre du rotor) peut servir de marque de repérage optique lors du réglage dynamique, appelé "track", du rotor.

Une nervure partielle d'extrémité, du type de celle des figures 10, 10a et 11, est une solution intéressante pour un capuchon rapporté destiné à recouvrir un saumon de pale tronqué sur une partie de la corde, et présentant de ce fait un bord d'attaque incliné vers le bord de fuite et vers l'extrémité du saumon, que ce saumon tronqué soit un saumon parabolique ou ayant un bord d'attaque incliné avec un angle de flèche par rapport au bord d'attaque de la partie courante de la pale, car des vis d'équilibrage ne sont pas toujours présentes.

Dans la variante de la figure 11b, un cavalier intermédiaire 58 de liaison et profilé, de section en U, en métal ou alliage électriquement conducteur, assure la continuité électrique entre le capuchon 333 et la coiffe 332, en alternative à la continuité électrique assurée directement entre capuchon et coiffe, disposés bout à bout ou en chevauchement partiel de l'un par l'autre, comme décrit ci-dessus et représenté sur les figures 1 à 11a.

Sur la figure 11b, le cavalier 58, d'une part, est partiellement recouvert par le capuchon 333, analogue à celui 33' de la figure 10, et, d'autre part, recouvre partiellement la coiffe 332 de façon à être en continuité électrique avec le capuchon 333 et avec la coiffe 332.

Le capuchon 333 est collé par ses ailes d'extrados 333a et d'intrados 333b contre les parties, que ces dernières recouvrent, des ailes d'extrados 58a et d'intrados 58b du cavalier 58, lequel est collé de la même manière par ses ailes d'extrados 58a et d'intrados 58b contre les parties qu'il recouvre des ailes d'extrados 332a et d'intrados 332b de la coiffe 332. Par ailleurs, comme dans les exemples précédents, le capuchon 333 est collé contre la tranche d'extrémité 10 du saumon par sa nervure d'extrémité arrière 333e, et contre les parties sous-jacentes d'extrados et d'intrados de la structure de la pale, de même que la coiffe 332.

Dans les zones de recouvrement entre éléments électriquement conducteurs, l'adhésif est électriquement conducteur.

En outre, des rivets 17 peuvent fixer l'aile d'extrados 333a et/ou d'intrados 333b du capuchon 333 sur les parties recouvertes de l'aile d'extrados 58a et/ou d'intrados 58b du cavalier 58 et en même temps dans la structure sous-jacente de la pale, et d'autres rivets 17 peuvent fixer l'aile d'extrados 58a et/ou d'intrados 58b du cavalier 58 sur les parties recouvertes de l'aile d'extrados 332a et/ou d'intrados 332b de la coiffe 332.

En variante, le cavalier 58 peut être fixé sur la structure de la pale et recouvert en partie par le capuchon 333 et en partie par la coiffe 332, ou encore, le cavalier 58 peut partiellement recouvrir le capuchon 333 et la coiffe 332, tous deux fixés sur la structure de la pale.

Enfin, il est possible que la coiffe recouvre une partie du cavalier qui recouvre lui-même en partie le capuchon.

Les ailes 58a et 58b du cavalier 58 peuvent avoir des dimensions différentes selon la corde, de la même manière que les ailes 332a et 332b de la coiffe 332, et dans la partie du cavalier 58 en recouvrement avec le capuchon 333, les ailes 58a et 58b du cavalier 58 ont des dimensions et/ou une section de matière présentant avantageusement les mêmes relations que décrites ci-dessus entre les ailes du capuchon et les parties adjacentes des ailes de la coiffe, à proximité du bord d'attaque.

Une pale avec saumon tronqué en flèche est partiellement et schématiquement représentée sur la figure 13. Sur cette figure, le saumon 3' à l'extrémité externe de la partie courante 1' de la pale présente, vu en plan, une forme de trapèze rectangle dont le côté incliné constitue le bord d'attaque du saumon 3' et présente un angle de flèche qui peut être de 45° ± 15° environ par rapport au bord d'attaque de la partie courante 1'. Comme dans les exemples précédents, concernant des pales à saumons droits, deux pièces métalliques de blindage constituent, l'une une coiffe 42 de bord d'attaque, et l'autre, un capuchon 43 de saumon de pale 3'. Dans cet exemple, la coiffe 42 a des ailes d'extrados et d'intrados symétriques, c'est-à-dire de mêmes dimensions selon la corde et l'envergure de la pale ou dissymétriques, alors que l'aile d'intrados 43b du capuchon 43 est plus large, selon l'envergure, que l'aile d'extrados 43a. Toutefois, chacune des deux ailes 43a et 43b du capuchon 43 comprend une partie avant 47a ou 47b, une partie intermédiaire inclinée 48a ou 48b, et une partie arrière droite 49a ou 49b. Les deux parties avant 47a et 47b s'étendent selon l'envergure et chevauchent les parties d'extrémité respectivement des ailes d'extrados 42a et d'intrados de la coiffe 42 ou d'un cavalier de liaison intermédiaire jusqu'à leur bord interne 45a ou 45b, la partie avant 47b étant également plus large, selon la corde, que la partie avant 47a. Les deux parties intermédiaire 48a et 48b, chacune inclinée selon l'angle de flèche désiré dans le prolongement de la partie avant correspondante 47a ou 47b de l'aile d'extrados 43a ou d'intrados 43b du capuchon 43, sont solidaires l'une de l'autre et adjacentes l'une à l'autre le long du bord d'attaque incliné 50 du capuchon 43, ce bord d'attaque 50 recouvrant directement celui, de même forme, du saumon de pale 3'. Chacune des parties arrière droites 49a et 49b, qui prolonge la partie inclinée 48a ou 48b correspondante vers le bord de fuite 8' de la pale en étant sensiblement perpendiculaire à ce dernier, ou inclinée d'un petit angle (de l'ordre de 3°) vers l'arrière et vers le pied de pale pour rester dans le diamètre du rotor passant par le raccordement entre les parties 48a ou 48b et 49a ou 49b afin d'éviter l'érosion d'une tranche "droite", est séparée de l'autre partie arrière droite par la tranche d'extrémité profilée, schématiquement indiquée par la flèche 51, du saumon de pale 3'. En variante de définition, les segments droits 47a, 47b, 48a, 48b et 49a, 49b peuvent être remplacés de manière équivalente par une courbe.

Pour la fixation du capuchon 43 contre cette tranche d'extrémité 51 du saumon 3', laquelle présente une section profilée inférieure à celle de la partie courante 1' de la pale, on peut réaliser une nervure partielle à un volet plié et soudé ou à deux volets dont l'un est double, plié, contre-coudé et riveté à l'autre, comme sur les figures 10 et 11, pour relier la partie arrière droite 49a de l'aile d'extrados 43a à la partie arrière droite 49b de l'aile d'intrados 43b, cette nervure partielle étant fixée sur la tranche d'extrémité 51 par un collage conducteur et par des moyens mécaniques tels qu'une ou deux vis, comme sur les figures 2 et 4, mais n'assurant pas forcément la fonction de fermeture de boîtier d'équilibrage, des rivets pouvant également être utilisés pour fixer sur la structure composite du saumon 3' la zone, voisine du bord de fuite 8', des parties arrière droite 49a et 49b des deux ailes du capuchon 43. Les parties avant 47a et 47b de ce capuchon 43 sont également fixées à la structure composite sous-jacente du saumon de pale 3' et aux parties des ailes de la coiffe 42 qu'elles recouvrent par un collage conducteur et des rivets dans leur zone chevauchant les ailes correspondantes de la coiffe 42. De plus, chaque bord interne 46a ou 46b d'une aile 43a ou 43b du capuchon 43 présente deux parties concaves à rayon de raccordement, dont l'une raccorde la partie arrière droite correspondante, 49a ou 49b, à la partie inclinée respective 48a ou 48b, et l'autre raccorde cette partie inclinée 48a ou 48b à la partie avant 47a ou 47b de l'aile correspondante 43a ou 43b du capuchon 43.

L'avantage de cette réalisation est que la pièce de blindage formant le capuchon 43 présente une surface développable, et peut donc être réalisée par un pliage à partir d'une pièce continue de tôle préalablement découpée aux dimensions requises, l'autre pièce de blindage, formant la coiffe 42, ayant également une surface développable, et pouvant également être réalisée, à partir d'une pièce continue de tôle, par un pliage le long du bord d'attaque de la partie courante 1' et un étirage pour conformer la coiffe 42, suivi d'un découpage des contours de la pièce, par un procédé de découpe au laser ou équivalent, aux dimensions requises. Pour le capuchon 43, un pliage le long de son bord d'attaque incliné 50 permet de le conformer dans ses parties avant et inclinées 47a, 47b et 48a, 48b, et de positionner ses parties arrière 49a et 49b de part et d'autre de la section d'extrémité 51 du saumon de pale 3', et de sorte qu'il ne reste plus qu'à relier les deux parties arrière droites 49a et 49b par une nervure partielle.

Les figures 14 et 15 représentent une variante de capuchon à surface développable pour pale à saumon tronqué en flèche avec coiffe de bord d'attaque à ailes symétriques ou dissymétriques. Une autre variante consiste à découper les ailes 43'a et 43'b du capuchon de sorte qu'elles présentent le ou les volets ou patte(s) de fixation du capuchon contre la tranche d'extrémité du saumon, comme sur les figures 10a et 11a.

La figure 14 représente la pièce de tôle développée, prédécoupée aux dimensions requises, avant le pliage de conformation. La figure 15 représente le capuchon 43' mis en forme par un pliage de conformation et détourage de la pièce de tôle de la figure 14.

Sur la figure 14, les contours de la pièce de tôle à plat ont sensiblement la forme d'un "Y" incliné. Les deux branches du Y, chacune en forme sensiblement de parallélogramme, correspondent aux parties arrière 49'a et 49'b respectivement des ailes d'extrados 43'a et d'intrados 43'b du capuchon 43', développées à plat. Le pied du Y est constitué essentiellement par les deux parties intermédiaires inclinées 48'a et 48'b des deux ailes 43'a et 43'b du capuchon 43', ces deux parties 48'a et 48'b étant solidaires l'une de l'autre et adjacentes l'une à l'autre le long d'un axe de pliage 50', qui correspond au bord d'attaque incliné du capuchon 43' conformé. Le pied du Y est également formé, aux extrémités des parties inclinées 48'a et 48'b qui sont à l'opposé des parties arrière 49'a et 49'b, par les parties avant 47'a et 47'b des ailes 43'a et 43'b. Ces parties avant 47'a et 47'b sont, dans cette variante, de surface très limitée pour ne recouvrir que l'extrémité externe de la coiffe de bord d'attaque correspondante ou d'un cavalier intermédiaire, entre la coiffe et le capuchon 43'. Chaque partie avant 47'a ou 47'b est délimitée par un bord interne 45'a ou 45'b, pour chevaucher l'aile d'extrados ou d'intrados de la coiffe ou du cavalier intermédiaire, et par un bord avant 52'a ou 52'b pour s'étendre le long du bord d'attaque de l'extrémité de la coiffe recouverte par le capuchon 43' en étant directement adjacente, après repliage, à l'autre bord avant 52'b ou 52'a. L'axe de pliage 50' passe par le point de jonction des bords avant 52'a et 52'b (au bord d'attaque de la coiffe) et par le point de jonction des deux bords 53'a et 53'b externes (selon l'envergure de la pale, mais à l'intérieur des branches du Y avant pliage) des parties arrière 49'a et 49'b du capuchon 43'. Le bord "externe" 53'a de la partie arrière 49'a présente, en saillie vers l'intérieur du Y, à proximité de son bord de fuite 54'a, un volet double 55'a avec une partie 56'a triangulaire et adjacente à la partie arrière 49'a et avec une partie 57'a trapézoïdale et adjacente à la partie triangulaire 56'a, et percée d'un orifice pour au moins un rivet de fixation. En correspondance, le bord "externe" 53'b de l'autre partie arrière 49'b présente, en saillie vers l'intérieur du Y, à proximité de son bord de fuite 54'b, un volet trapézoïdal d'une seule pièce 55'b. Chacune des parties arrière 49'a et 49'b présente également, à proximité de son bord de fuite 54'a ou 54'b, au moins deux trous de passage de rivets. De même, les parties avant 47'a et 47'b présentent chacune au moins deux trous de passage de rivets. Par un pliage autour de l'axe 50', on rabat l'aile d'intrados 43'b (la plus large selon la corde) du capuchon 43' sous son aile d'extrados 43'a, ce qui conforme les parties avant et inclinées 47'b et 48'b par dessous les parties avant et inclinée 47'a et 48'a de l'aile d'extrados 43'a du capuchon 43'. Simultanément, les parties arrière 49'a et 49'b sont disposées sensiblement à l'aplomb l'une au-dessus de l'autre. La partie 56'a du volet 55'a peut être rabattue perpendiculairement au plan de la figure 14, et l'autre partie 57'a de ce même double volet 55'a peut ensuite être repliée pour être appliquée contre le volet 55'b de l'autre partie arrière 49'b. De la sorte, par la pose d'au moins un rivet solidarisant ces deux volets 55'a et 55'b, on réalise une nervure partielle reliant les deux parties arrière 49'a et 49'b, lesquelles peuvent être fixées par deux rivets au niveau de leur bord de fuite 54'a et 54'b, après mise en place sur la structure composite de base d'une pale à saumon tronqué en flèche, comme sur la figure 13, ou avec la faible inclinaison vers l'arrière et vers le pied de pale pour rester dans le diamètre du rotor passant par le raccordement entre les parties 48a ou 48b et 49a ou 49b. De même, deux rivets permettent de fixer chacune des parties avant 47'a et 47'b sur la structure composite sous-jacente de la pale, et sur la portion qu'elle recouvre de l'aile d'extrados ou d'intrados de la coiffe correspondante.

On peut ainsi, de manière simple, réaliser un capuchon que l'on rapporte sur le saumon de pale et sur l'extrémité externe de la coiffe de bord d'attaque ou éventuellement par l'intermédiaire d'un cavalier conducteur de liaison, pour obtenir un blindage de protection renforcée contre la foudre avec un capuchon de saumon de pale et de préférence également une coiffe de bord d'attaque présentant chacun des ailes d'extrados et d'intrados dissymétriques.

Un tel capuchon peut être réalisé pour toutes les extrémités de pale, y compris celles ayant des formes non développables (parabolique par exemple) par des opérations d'emboutissage, d'électroformage et/ou d'étirage plastique, le bord d'attaque du capuchon étant fabriqué par des opérations de pliage (d'une tôle ou d'un laminé de titane par exemple), d'étirage-conformage ou poinçonnage, et de découpage au contour final.

## Revendications

1. Pale à blindage de protection renforcée contre la foudre, pour rotor de giravion, en particulier pour rotor d'hélicoptère, ladite pale comprenant une structure composite (20) essentiellement en matériau composite à matrice synthétique et fibres de renfort minérales et/ou organiques, réalisant une partie courante profilée (1) délimitée entre une surface d'extrados (5) et une surface d'intrados (6) qui s'étendent, selon la corde de la pale, entre un bord d'attaque (7) et un bord de fuite (8) et, selon l'envergure de la pale, entre un saumon de pale (3) à une extrémité de ladite partie courante (1) et un pied de pale (2) qui prolonge l'extrémité opposée de ladite partie courante (1), et qui comporte des moyens (9) d'attache de la pale, pour sa liaison à un moyeu de rotor, ledit blindage de protection contre la foudre comprenant :
- une coiffe (12) de protection du bord d'attaque (7), ladite coiffe (12) étant métallique, électriquement conductrice, et comprenant une aile d'extrados (12a) et une aile d'intrados (12b), adjacentes le long du bord d'attaque (7) et fixées sur des parties sous-jacentes des surfaces d'extrados (5) et d'intrados (6),
- un capuchon (13) de protection dudit saumon de pale (3), ledit capuchon (13) étant distinct de la coiffe (12) et rapporté sur la pale de sorte à coiffer au moins l'extrémité dudit saumon de pale (3), et étant métallique, électriquement conducteur, et comprenant une aile d'extrados (13a) et une aile d'intrados (13b) qui s'étendent sur toute la corde d'extrémité dudit saumon de pale (3) et sont appliquées sur des parties sous-jacentes desdites surfaces respectivement d'extrados (5) et d'intrados (6) au niveau du saumon (3), le capuchon (13) étant relié en continuité électrique avec ladite coiffe (12), soit directement, soit au moyen d'au moins un cavalier intermédiaire (58), lui-même conducteur, et fixé en continuité électrique avec la coiffe et le capuchon, et
- des moyens (18) électriquement conducteurs sur ledit pied de pale (2), et destinés à assurer la continuité électrique entre ladite coiffe (12) et des moyens électriquement conducteurs dudit moyeu, pour la mise à la masse dudit blindage (12, 13),
caractérisée en ce qu'au moins ledit capuchon (13) a une aile d'extrados (13a) dont les dimensions, au moins selon l'envergure, sont différentes des dimensions de son aile d'intrados (13b).

2. Pale selon la revendication 1, caractérisée en ce que la coiffe (12) a des ailes d'extrados (12a) et d'intrados (12b) ayant sensiblement les mêmes dimensions, au moins selon la corde de la pale.

3. Pale selon la revendication 1, caractérisée en ce que la coiffe (12') a une aile d'extrados (12'a) dont les dimensions, au moins selon la corde de la pale, sont différentes de celles de son aile d'intrados (12'b).

4. Pale selon l'une quelconque des revendications 1 à 3, caractérisée en ce que l'une au moins desdites ailes d'extrados et d'intrados (13a, 13b) du capuchon (13) a une dimension et/ou section de matière, selon l'envergure, qui est plus grande dans la zone voisine du bord d'attaque (7) que dans la zone voisine du bord de fuite (8).

5. Pale selon la revendication 4, caractérisée en ce que l'une au moins desdites ailes d'extrados et d'intrados (33a, 33b) du capuchon (33) présente une dimension et/ou section de matière, selon l'envergure, qui se réduit sensiblement progressivement d'une zone voisine du bord d'attaque (7) à une zone voisine du bord de fuite (8), puis qui augmente dans une zone directement adjacente au bord de fuite (8) et jusqu'à ce dernier.

6. Pale selon l'une quelconque des revendications 1 à 5, caractérisée en ce que l'une au moins desdites ailes d'extrados et d'intrados (13a, 13b) du capuchon (13) a, dans sa zone voisine du bord d'attaque (7), une dimension et/ou section de matière selon l'envergure qui n'est pas sensiblement inférieure à la dimension et/ou section de matière, selon la corde, de la zone adjacente de l'aile correspondante d'extrados (12a) ou d'intrados (12b) de la coiffe (12).

7. Pale selon l'une quelconque des revendications 1 à 6, caractérisée en ce que l'une au moins des ailes d'extrados et d'intrados (13a, 13b) du capuchon (13) a, dans sa zone voisine du bord d'attaque (7), un bord (16a, 16b) s'étendant sur ladite surface d'extrados ou d'intrados (5, 6) correspondante et qui présente une partie concave, avec un rayon de raccordement, prolongée sensiblement par le bord correspondant (14a, 14b) de l'aile d'extrados ou d'intrados correspondante (12a, 12b) de la coiffe (12).

8. Pale selon l'une quelconque des revendications 1 à 7, caractérisée en ce que l'une au moins des ailes d'extrados et d'intrados (13'a, 13'b) du capuchon (13') a, au moins dans sa zone voisine du bord d'attaque (7), une section transversale développée qui est au moins égale ou supérieure à celle de l'aile correspondante d'extrados ou d'intrados (12'a, 12'b) de la coiffe (12) dans sa zone adjacente au capuchon (13').

9. Pale selon l'une des revendications 1 à 8, caractérisée en ce que les bords (16a, 16b) des ailes d'extrados et d'intrados (13a, 13b) du capuchon (13) qui s'étendent sur lesdites surfaces d'extrados et d'intrados (5, 6) évoluent parallèlement l'un à l'autre mais sont décalés l'un par rapport à l'autre selon l'envergure de la pale, en suivant une ligne polygonale ou avec une courbure continue.

10. Pale selon l'une quelconque des revendications 1 à 9, dont le saumon (3') est tronqué sur au moins une partie de la corde et présente un bord d'attaque rectiligne ou courbe, tel que parabolique, incliné vers le bord de fuite (8') et vers l'extrémité du saumon (3'), et une tranche droite d'extrémité, caractérisée en ce que le capuchon (43) présente un bord d'attaque (50) incliné, de même forme que celui du saumon (3') et le long duquel ses ailes d'extrados et d'intrados (43a, 43b) sont adjacentes et solidaires l'une de l'autre.

11. Pale selon l'une quelconque des revendications 1 à 10, caractérisée en ce que ledit capuchon (13) est fixé contre au moins la tranche (10) d'extrémité de ladite structure composite (20) au niveau dudit saumon de pale (3) à l'aide de moyens de fixation (11) au moins en partie électriquement conducteurs.

12. Pale selon la revendication 11, caractérisée en ce que les moyens de fixation comprennent au moins un adhésif, éventuellement électriquement conducteur, assurant le collage du capuchon (13) contre au moins une partie de la tranche d'extrémité (10) du saumon de pale (3) et/ou une partie de l'une au moins desdites surfaces d'extrados (5) et d'intrados (6) de la structure composite (20), et/ou une partie de la coiffe (12) et/ou du cavalier intermédiaire (58) lui-même collé contre au moins une partie de la coiffe (12).

13. Pale selon l'une des revendications 11 à 12, caractérisée en ce que lesdits moyens de fixation comprennent des moyens mécaniques (11, 17) présentant des formes protubérantes, telles que vis et rivets, constituant des points prédéterminés d'impact ou de sortie de la foudre, et mis en continuité électrique avec ledit capuchon (13).

14. Pale selon la revendication 13, caractérisée en ce que lesdits moyens mécaniques de fixation comprennent au moins une vis (11) d'équilibrage et/ou de fermeture d'un logement (23) d'au moins une masse d'équilibrage et/ou de réglage dynamique, et qui se visse dans une zone de ladite tranche (10) d'extrémité du saumon de pale (3) qui est plus proche dudit bord d'attaque (7) que du bord de fuite (8).

15. Pale selon la revendication 14, caractérisée en ce que ladite vis (11) fixe contre ladite tranche (10) d'extrémité du saumon de pale (3) au moins une patte de capuchon (13c, 13d), qui prolonge l'une au moins desdites ailes d'extrados (13a) et d'intrados (13b) dudit capuchon (13) et est repliée par rapport auxdites ailes d'extrados (13a) et d'intrados (13b) du capuchon.

16. Pale selon la revendication 14, caractérisée en ce que ladite vis (11) fixe contre ladite tranche d'extrémité du saumon de pale (3) une nervure (33e) électriquement conductrice d'extrémité du capuchon (33), reliant lesdites ailes d'extrados (33a) et d'intrados (33b) du capuchon (33) et s'étendant sur toute la section de ladite tranche d'extrémité.

17. Pale selon l'une quelconque des revendications 12 à 15, caractérisée en ce que ledit capuchon (33', 33") comprend une nervure partielle d'extrémité (33'e, 33"e), électriquement conductrice, reliant les ailes d'extrados (33'a, 33"a) et d'intrados (33"a, 33"b) du capuchon (33', 33") avec lesquelles ladite nervure partielle (33'c, 33"c) est en continuité électrique, et s'étendant sur une partie de la section de ladite tranche d'extrémité (10) qui est adjacente audit bord de fuite (8).

18. Pale selon la revendication 17, caractérisée en ce que ladite nervure partielle d'extrémité (33'e) comprend au moins un volet de capuchon, qui prolonge l'une desdites ailes d'extrados et d'intrados (33'a, 33'b) du capuchon (33'), et est replié contre ladite partie de tranche d'extrémité (10) adjacente au bord de fuite (8), ledit volet (33'e) étant fixé, de préférence par soudure, à l'autre desdites ailes d'extrados et d'intrados (33'a, 33'b) du capuchon (33').

19. Pale selon la revendication 17, caractérisée en ce que ladite nervure partielle d'extrémité (33"e) comprend au moins un double volet (33"f) de capuchon, qui prolonge l'une desdites ailes d'extrados et d'intrados (33"a, 33"b) du capuchon (33"), et dont une première partie (33"g), adjacente à ladite aile (33"a, 33"b) du capuchon (33"), est repliée contre ladite partie de tranche d'extrémité (10) adjacente au bord de fuite (8), tandis que la seconde partie (33"h) du double volet (33"f), adjacente à la première partie (33"g) de ce dernier, est contre-coudée par rapport à la première partie (33"g) dudit double volet (33"f) et fixée, de préférence par au moins un rivet (25), contre un second volet (33"i) prolongeant l'autre desdites ailes d'extrados et d'intrados (33"a, 33"b) du capuchon (33") et en saillie selon l'envergure au-delà de ladite tranche d'extrémité (10) du saumon de pale (3).

20. Pale selon l'une quelconque des revendications 1 à 15, caractérisée en ce que le capuchon (133) comporte une nervure (133e) au moins partielle d'extrémité, électriquement conductrice, en continuité électrique avec les ailes d'extrados (133a) et d'intrados (133b) du capuchon (133), et percée d'au moins une fente traversée par au moins une ailette (134) électriquement conductrice solidaire de la structure composite de la pale et en saillie, selon l'envergure, vers l'extérieur du saumon de pale (3) la portion de l'ailette (134) en saillie à l'extérieur de la nervure (133e) étant repliée, au moins en partie (134a, 134b), contre ladite nervure (133e) afin de maintenir la nervure (133e) appliquée contre la tranche d'extrémité (10) de la pale.

21. Pale selon l'une quelconque des revendications 1 à 15, caractérisée en ce que la structure composite de la pale est prolongée, selon l'envergure et en saillie à l'extérieur du saumon de pale (3), par au moins une ailette (234) électriquement conductrice solidaire de ladite structure composite et contre deux faces opposées de laquelle sont fixées, par collage de préférence conducteur et/ou par rivetage (237) ou vissage, des parties contre-coudées (236a, 236b) d'au moins deux pattes (235a, 235b) repliées contre la tranche d'extrémité (10) du saumon de pale (3) et chacune solidaire de l'une respectivement des ailes d'extrados (233a) et d'intrados (233b) du capuchon (233).

22. Pale selon l'une quelconque des revendications 13 à 20, caractérisée en ce que lesdits moyens mécaniques de fixation comprennent au moins un rivet (17) fixant l'une au moins desdites ailes d'extrados (13a) et d'intrados (13b) dudit capuchon (13) contre l'une au moins desdites ailes d'extrados (12a) et d'intrados (12b) de ladite coiffe (12) ou du cavalier intermédiaire (58) et/ou contre l'une au moins desdites surfaces d'extrados (5) et d'intrados (6), au niveau du saumon de pale (3), dans une zone voisine du bord de fuite (8) et/ou dans une zone voisine du bord d'attaque (7) et/ou de l'ailette conductrice, le cas échéant.

23. Pale selon l'une quelconque des revendications 1 à 22, caractérisée en ce que lesdits moyens électriquement conducteurs dudit pied de pale (2), pour assurer la continuité électrique entre la coiffe (12) et le moyeu, comprennent au moins un ruban (18) et/ou une tresse métallique électriquement conducteur s'étendant depuis une extrémité de ladite coiffe (12) qui est la plus proche dudit pied de pale (2), jusqu'à un point fixe (19) dudit pied de pale (2) et fixé(e) à ce dernier par collage et/ou rivetage ou vissage.

24. Pale selon l'une quelconque des revendications 1 à 22, caractérisée en ce que lesdits moyens électriquement conducteurs dudit pied de pale (2), pour assurer la continuité électrique entre la coiffe (12) et le moyeu, comprennent un prolongement continu (12c) de ladite coiffe (12) qui protège une partie dudit pied de pale (2) venant dans le prolongement du bord d'attaque jusqu'à proximité desdits moyens d'attache (9) de la pale, ledit prolongement (12c) de la coiffe (12) étant fixé en au moins un point contre ledit pied de pale (2) par des moyens mécaniques de fixation (19), du type vis ou rivets et/ou par un adhésif de préférence conducteur.

25. Pale selon l'une quelconque des revendications 1 à 22, dont lesdits moyens d'attache (9) de la pale comprennent, sur le pied de pale (2), au moins une douille d'attache (9) métallique et électriquement conductrice, caractérisée en ce que lesdits moyens électriquement conducteurs dudit pied de pale (2), pour assurer la continuité électrique entre la coiffe (12) et le moyeu, comprennent un prolongement continu (12c) de ladite coiffe (12) qui s'étend jusqu'à être en liaison directe (12d) avec ladite douille d'attache (9).

26. Pale selon l'une quelconque des revendications 1 à 25, caractérisée en ce que ledit capuchon (13") présente une extrémité de fuite (24) qui déborde en saillie au-delà dudit bord de fuite (8) de la pale.

27. Pale selon l'une quelconque des revendications 1 à 26, dont les fibres de renfort de ladite structure composite (20) comprennent des fibres de carbone, caractérisée en ce qu'elle comprend, au moins entre ladite partie courante (1) et ladite coiffe (12) de bord d'attaque (7), une coiffe (25) sous-jacente diélectrique, de préférence composite à matrice synthétique et fibres de renfort en verre, qui isole la coiffe (12) de bord d'attaque de ladite structure composite (20).

28. Pale selon l'une quelconque des revendications 1 à 27, caractérisée en ce que le capuchon (13) est en un matériau de même nature que la coiffe (12), et de préférence en titane, acier inoxydable formé ou nickel électroformé.

## Patentansprüche

1. Blatt mit Abschirmung zum verstärkten Blitzschutz für einen Drehflügler-Rotor, insbesondere für einen Hubschrauberrotor, wobei das Blatt einen Verbundaufbau (20) im wesentlichen aus Verbundwerkstoff mit einer synthetischen Matrix und mineralischen und/oder organischen Verstärkungsfasern enthält, der einen profilierten Strömungsteil (1) realisiert, der zwischen einer Saugseitenoberfläche (5) und einer Druckseitenoberfläche (6) eingegrenzt ist, die sich entlang der Tiefe des Blattes zwischen einer Vorderkante (7) und einer Hinterkante (8) und entlang der Spannweite des Blattes zwischen einem Blattendstück (3) an einem Ende des Strömungsteils (1) und einem Blattfuß (2) erstrecken, der das entgegengesetzte Ende des Strömungsteils (1) verlängert und der Mittel (9) zur Befestigung des Blattes für dessen Verbindung mit einer Rotornabe enthält, wobei die Abschirmung zum Blitzschutz umfaßt:
- eine Haube (12) zum Schutz der Vorderkante (7), wobei die genannte Haube (12) metallisch und elektrisch leitfähig ist und einen Saugseitenflügel (12a) und einen Druckseitenflügel (12b) enthält, die entlang der Vorderkante (7) aneinandergrenzen und auf darunter liegenden Teilen der Saugseiten- (5) und der Druckseitenoberfläche (6) befestigt sind,
- eine Kappe (13) zum Schutz des Blattendstücks (3), wobei die genannte Kappe (13) von der Haube (12) verschieden ist und am Blatt angesetzt ist, um wenigstens das Ende des Blattendstücks (3) zu bedecken, und metallisch und elektrisch leitfähig ist und einen Saugseitenflügel (13a) und einen Druckseitenflügel (13b) enthält, die sich über die ganze Endtiefe des Blattendstücks (3) erstrecken und auf darunter liegenden Teilen der Saugseiten- (5) bzw. der Druckseitenoberfläche (6) in Höhe des Endstücks (3) befestigt sind, wobei die Kappe (13) mit der genannten Haube (12) entweder direkt oder mittels wenigstens einer Leiter-Zwischenbrücke (58) elektrisch leitend verbunden ist, die ihrerseits leitfähig ist und an der Haube und der Kappe elektrisch leitend befestigt ist, und
- Mittel (18) am Blattfuß (2), die elektrisch leitfähig sind und die elektrische Leitkontinuität zwischen der genannten Haube (12) und elektrisch leitfähigen Mitteln der Nabe sicherstellen sollen, zum Legen der genannten Abschirmung (12, 13) an Masse,
**dadurch gekennzeichnet,** daß wenigstens die genannte Kappe (13) einen Saugseitenflügel (13a) hat, dessen Abmessungen zumindest entlang der Spannweite gegenüber den Abmessungen ihres Druckseitenflügels (13b) verschieden sind.

2. Blatt nach Anspruch 1, **dadurch gekennzeichnet,** daß die Haube (12) Saugseiten- (12a) und Druckseitenflügel (12b) hat, die im wesentlichen die gleichen Abmessungen, zumindest entlang der Tiefe des Blattes, haben.

3. Blatt nach Anspruch 1, **dadurch gekennzeichnet**, daß die Haube (12') einen Saugseitenflügel (12'a) hat, dessen Abmessungen zumindest entlang der Tiefe des Blattes verschieden von denjenigen ihres Druckseitenflügels (12'b) sind.

4. Blatt nach einem der Ansprüche 1 bis 3, **dadurch gekennzeichnet,** daß wenigstens einer der genannten Saugseiten- und Druckseitenflügel (13a, 13b) der Kappe (13) entlang der Spannweite eine Materialabmessung und/oder einen Materialquerschnitt hat, die/der in der Nachbarzone der Vorderkante (7) größer als in der Nachbarzone der Hinterkante (8) ist.

5. Blatt nach Anspruch 4, **dadurch gekennzeichnet,** daß wenigstens einer der genannten Saugseiten- und Druckseitenflügel (33a, 33b) der Kappe (33) entlang der Spannweite eine Materialabmessung und/oder einen Materialquerschnitt aufweist, die/der sich im wesentlichen progressiv von einer Nachbarzone der Vorderkante (7) zu einer Nachbarzone der Hinterkante (8) verringert und die/der dann in einer direkt an die Hinterkante (8) angrenzenden Zone zunimmt und zwar bis zu dieser Kante.

6. Blatt nach einem der Ansprüche 1 bis 5, **dadurch gekennzeichnet,** daß wenigstens einer der genannten Saugseiten- und Druckseitenflügel (13a, 13b) der Kappe (13) in seiner Nachbarzone der Vorderkante (7) entlang der Spannweite eine Materialabmessung und/oder einen Materialquerschnitt hat, die/der nicht wesentlich geringer als die Materialabmessung und/oder der Materialquerschnitt der angrenzenden Zone des entsprechenden Saugseiten- (12a) oder Druckseitenflügels (12b) der Haube (12) entlang der Tiefe ist.

7. Blatt nach einem der Ansprüche 1 bis 6, **dadurch gekennzeichnet,** daß wenigstens einer der Saugseiten- und Druckseitenflügel (13a, 13b) der Kappe (13) in seiner Nachbarzone der Vorderkante (7) eine Kante (16a, 16b) hat, die sich auf der entsprechenden Saugseiten- oder Druckseitenoberfläche (5, 6) erstreckt und die einen konkaven, durch die entsprechende Kante (14a, 14b) des entsprechenden Saugseiten- oder Druckseitenflügels (12a, 12b) der Haube (12) verlängerten Teil mit Übergangsradius aufweist.

8. Blatt nach einem der Ansprüche 1 bis 7, **dadurch gekennzeichnet,** daß wenigstens einer der Saugseiten- und Druckseitenflügel (13'a, 13'b) der Kappe (13') zumindest in seiner Nachbarzone der Vorderkante (7) einen so ausgebildeten Querschnitt hat, daß er wenigstens gleich oder größer als derjenige des entsprechenden Saugseiten- oder Druckseitenflugels (12'a, 12'b) der Haube (12) in seiner an die Kappe (13') angrenzenden Zone ist.

9. Blatt nach einem der Ansprüche 1 bis 8, **dadurch gekennzeichnet,** daß die Kanten (16a, 16b) der Saugseiten- und Druckseitenflügel (13a, 13b) der Kappe (13), die sich auf den genannten Saugseiten- und Druckseitenoberflächen (5, 6) erstrecken, parallel zueinander verlaufen, jedoch entlang der Spannweite des Blattes in Bezug zueinander verschoben sind, wobei sie einer Polygonlinie folgen oder mit einer stetigen Krümmung.

10. Blatt nach einem der Ansprüche 1 bis 9, dessen Endstück (3') über wenigstens einen Teil der Tiefe abgestumpft ist und eine geradlinige oder krumme, wie z.B. eine parabolische Vorderkante, die zur Hinterkante (8') hin und zum Ende des Endstücks (3') hin geneigt ist, und eine gerade Endschnittfläche aufweist, **dadurch gekennzeichnet,** daß die Kappe (43) eine Vorderkante (50) aufweist, die in gleicher Form wie diejenige des Endstücks (3') geneigt ist und an der entlang ihre Saugseiten- und Druckseitenflügel (43a, 43b) angrenzen und miteinander vereint sind.

11. Blatt nach einem der Ansprüche 1 bis 10, **dadurch gekennzeichnet,** daß die genannte Kappe (13) wenigstens an der Endschnittfläche (10) des genannten Verbundaufbaus (20) in Höhe des genannten Blattendstücks (3) mit Hilfe von zumindest teilweise elektrisch leitfähigen Befestigungsmitteln (11) befestigt ist.

12. Blatt nach Anspruch 11, **dadurch gekennzeichnet**, daß die Befestigungsmittel wenigstens einen möglicherweise elektrisch leitfähigen Kleber enthalten, der die Haftung der Kappe (13) an wenigstens einem Teil der Endschnittfläche (10) des Blattendstücks (3) und/oder einem Teil von wenigstens einer der genannten Saugseiten- (5) und Druckseitenoberflächen (6) des Verbundaufbaus (20) und/oder einem Teil der Haube (12) und/oder der Leiter-Zwischenbrücke (58) sicherstellt, die ihrerseits an wenigstens einem Teil der Haube (12) angeklebt ist.

13. Blatt nach einem der Ansprüche 11 bis 12, **dadurch gekennzeichnet**, daß die Befestigungsmittel mechanische Mittel (11, 17) umfassen, die hervorragende Formen aufweisen, wie z.B. Schrauben und Nieten, die vorher festgelegte Einschlag- oder Austrittspunkte des Blitzes bilden, und die mit der genannten Kappe (13) elektrisch leitend verbunden sind.

14. Blatt nach Anspruch 13, **dadurch gekennzeichnet,** daß die genannten mechanischen Befestigungsmittel wenigstens eine Ausgleichs- und/oder Verschlußschraube (11) einer Aufnahme (23) wenigstens einer Masse zum Ausgleich und/oder zur dynamischen Einstellung umfassen und diese Schraube in einer Zone der genannten Endschnittfläche (10) des Blattendstücks (3) verschraubt wird, die näher an der Vorderkante (7) als an der Hinterkante (8) ist.

15. Blatt nach Anspruch 14, **dadurch gekennzeichnet,** daß die genannte Schraube (11) an der genannten Endschnittfläche (10) des Blattendstücks (3) wenigstens einen Kappenlappen (13c, 13d) befestigt, der wenigstens einen der genannten Saugseiten- (13a) und Druckseitenflügel (13b) der Kappe (13) verlängert und bezüglich der genannten Saugseiten- (13a) und Druckseitenflügel (13b) der Kappe abgekantet ist.

16. Blatt nach Anspruch 14, **dadurch gekennzeichnet,** daß die genannte Schraube (11) an der genannten Endschnittfläche des Blattendstücks (3) eine elektrisch leitfähige Endrippe (33e) der Kappe (33) befestigt, welche den genannten Saugseiten-(33a) und Druckseitenflügel (33b) der Kappe (33) verbindet und sich über den ganzen Querschnitt der genannten Endschnittfläche erstreckt.

17. Blatt nach einem der Ansprüche 12 bis 15, **dadurch gekennzeichnet,** daß die genannte Kappe (33', 33'') eine elektrisch leitfähige, partielle Endrippe (33'e, 33''e) umfaßt, welche den, Saugseiten- (33'a, 33''a) und Druckseitenflügel (33'b, 33''b) der Kappe (33', 33'') verbindet, mit denen die genannte partielle Rippe (33'e, 33''e) in elektrischer Leitkontinuität steht, und welche sich über einen Teil des Abschnitts der genannten Endschnittfläche (10) erstreckt, der an die Hinterkante (8) angrenzt.

18. Blatt nach Anspruch 17, **dadurch gekennzeichnet,** daß die partielle Endrippe (33'e) wenigstens einen Kappenfortsatz umfaßt, der einen der Saugseiten- und Druckseitenflügel (33'a, 33'b) der Kappe (33') verlängert und an den genannten, an die Hinterkante (8) angrenzenden Teil der Endschnittfläche (10) hingebogen ist, wobei der genannte Fortsatz (33'e) vorzugsweise durch Verschweißung am jeweils anderen Saugseiten- bzw. Druckseitenflügel (33'a, 33'b) der Kappe (33') befestigt ist.

19. Blatt nach Anspruch 17, **dadurch gekennzeichnet,** daß die partielle Endrippe (33''e) wenigstens einen Kappen-Doppelfortsatz (33''f) enthält, der einen der Saugseiten- und Druckseitenflügel (33''a, 33''b) der Kappe (33'') verlängert und von dem ein erster, an den genannten Flügel (33"a, 33''b) angrenzender Teil (33''g) der Kappe (33'') an den genannten, an die Hinterkante (8) angrenzenden Teil der Endschnittfläche (10) hingebogen ist, wogegen der zweite Teil (33''h) des Doppelfortsatzes (33''f), der an den ersten Teil (33''g) dieses letzteren angrenzt, bezüglich des ersten Teils (33''g) des genannten Doppelfortsatzes (33''f) gekröpft und vorzugsweise mittels wenigstens einer Niete (25) an einem zweiten Fortsatz (33''i) befestigt ist, der den anderen Saugseiten- bzw. Druckseitenflügel (33''a, 33''b) der Kappe (33'') verlängert und entlang der Spannweite über die genannte Endschnittfläche (10) des Blattendstücks (3) hinaus vorsteht.

20. Blatt nach einem der Ansprüche 1 bis 15, **dadurch gekennzeichnet,** daß die Kappe (133) eine zumindest partielle, elektrisch leitfähige Endrippe (133e) umfaßt, die mit dem Saugseiten- (133a) und Druckseitenflügel (133b) der Kappe (133) in elektrischer Leitkontinuität steht und von wenigstens einem Schlitz durchbohrt ist, der mindestens von einem elektrisch leitfähigen Ansatz (134) durchquert ist, der mit dem Verbundaufbau des Blattes vereint ist und entlang der Spannweite vom Blattendstück (3) nach außen absteht, wobei der nach außen von der Rippe (133e) abstehende Bereich des Ansatzes (134) zumindest zum Teil (134a, 134b) an die genannte Rippe (133e) hingebogen ist, um die Rippe (133e) an der Endschnittfläche (10) des Blattes befestigt zu halten.

21. Blatt nach einem der Ansprüche 1 bis 15, **dadurch gekennzeichnet,** daß der Verbundaufbau des Blattes entlang der Spannweite verlängert ist und nach außen vom Blattendstück (3) mit wenigstens einem elektrisch leitfähigen Ansatz (234) vorsteht, der mit dem genannten Verbundaufbau vereint ist und bei dem an zwei abgewandten Flächen durch vorzugsweise leitfähige Verklebung und/oder durch Vernietung (237) oder Verschraubung gekröpfte Teile (236a, 236b) wenigstens zweier Lappen (235a, 235b) befestigt sind, die an die Endschnittfläche (10) des Blattendstücks (3) hingebogen sind und die jeweils mit dem Saugseiten- (233a) bzw. dem Druckseitenflügel (233b) der Kappe (233) verbunden sind.

22. Blatt nach einem der Ansprüche 13 bis 20, **dadurch gekennzeichnet,** daß die genannten mechanischen Befestigungsmittel wenigstens eine Niete (17) umfassen, die wenigstens einen der Saugseiten- (13a) und Druckseitenflügel (13b) der Kappe (13) an wenigstens einem der Saugseiten- (12a) und Druckseitenflügel (12b) der genannten Haube (12) oder der Leiter-Zwischenbrücke (58) und/oder wenigstens an einer der genannten Saugseiten- (5) und Druckseitenoberflächen (6) in Höhe des Blattendstücks (3) in einer Nachbarzone der Hinterkante (8) und/oder in einer Nachbarzone der Vorderkante (7) und/oder gegebenenfalls des leitfähigen Ansatzes befestigt.

23. Blatt nach einem der Ansprüche 1 bis 22, **dadurch gekennzeichnet,** daß die genannten elektrisch leitfähigen Mittel des Blattfußes (2) zum Sicherstellen der elektrischen Leitkontinuität zwischen der Haube (12) und der Nabe wenigstens ein elektrisch leitfähiges Band (18) und/oder Metallgeflecht umfassen, das sich von einem Ende der genannten Haube (12), das am nächsten zum genannten Blattfuß (2) liegt, bis zu einem Festpunkt (19) des Blattfußes (2) erstreckt und an diesem letzteren durch Verklebung und/oder Vernietung oder Verschraubung befestigt ist.

24. Blatt nach einem der Ansprüche 1 bis 22, **dadurch gekennzeichnet,** daß die genannten elektrisch leitfähigen Mittel des Blattfußes (2) zum Sicherstellen der elektrischen Leitkontinuität zwischen der Haube (12) und der Nabe eine durchgehende Verlängerung (12c) der genannten Haube (12) enthalten, die einen Teil des genannten Blattfußes (2) schützt, der in die Verlängerung der Vorderkante bis in die Nähe der Befestigungsmittel (9) des Blattes reicht, wobei die genannte Verlängerung (12c) der Haube (12) an wenigstens einem Punkt am Blattfuß (2) durch mechanische Befestigungsmittel (19) in der Art von Schrauben oder Nieten und/oder durch einen vorzugsweise leitfähigen Kleber befestigt ist.

25. Blatt nach einem der Ansprüche 1 bis 22 wobei die genannten Befestigungsmittel (9) des Blattes am Blattfuß (2) wenigstens eine metallische und elektrisch leitfähige Befestigungsbuchse (9) umfassen, **dadurch gekennzeichnet,** daß die genannten elektrisch leitfähigen Mittel des Blattfußes (2) zum Sicherstellen der elektrischen Leitkontinuität zwischen der Haube (12) und der Nabe eine durchgehende Verlängerung (12c) der genannten Haube (12) enthalten, die sich so weit erstreckt, daß sie in direkter Verbindung (12d) mit der genannten Befestigungsbuchse (9) ist.

26. Blatt nach einem der Ansprüche 1 bis 25, **dadurch gekennzeichnet,** daß die genannte Kappe (13'') ein Hinterende (24) aufweist, das über die Hinterkante (8) des Blattes hinaus abstehend übersteht.

27. Blatt nach einem der Ansprüche 1 bis 26, wobei die Verstärkungsfasern des genannten Verbundaufbaus (20) Karbonfasern umfassen, **dadurch gekennzeichnet,** daß es zumindest zwischen dem genannten Strömungsteil (1) und der genannten Haube (12) der Vorderkante (7) eine dielektrische Unterhaube (25) vorzugsweise aus Verbundwerkstoff mit einer Synthetikmatrix und Verstärkungsfasern aus Glas umfaßt, welche die Haube (12) der Vorderkante des genannten Verbundaufbaus (20) isoliert.

28. Blatt nach einem der Ansprüche 1 bis 27, **dadurch gekennzeichnet,** daß die Kappe (13) aus einem Werkstoff von gleicher Beschaffenheit wie die Haube (12) und vorzugsweise aus Titan, nichtoxidierbarem Formstahl oder elektrogeformtem Nickel ist.

## Claims

1. Blade with shielding for enhanced protection against lightning for a rotorcraft rotor, particularly for a helicopter rotor, said blade comprising a composite structure (20) essentially in composite material with a synthetic matrix and inorganic and/or organic reinforcing fibres, producing a profiled main blade section (1) delimited between a suction face surface (5) and a pressure face surface (6) which extend, in the direction of the chord of the blade, between a leading edge (7) and a trailing edge (8) and, in the direction of the span of the blade, between a blade tip (3) at one end of said main blade section (1) and a blade root (2) which extends the opposite end of said main blade section (1) and which includes means (9) for attaching the blade for linking it to a rotor hub, said shielding for protection against lightning comprising:
- a glove (12) for protecting the leading edge (7), said glove (12) being metallic, electrically conducting, and comprising a suction face arm (12a) and a pressure face arm (12b) which are adjacent along the leading edge (7) and which are fixed to underlying parts of the suction face surface (5) and pressure face surface (6),
- a cap (13) for protecting said blade tip (3), said cap (13) being distinct from the glove (12) and attached to the blade in such a way as to cover at least the end of said blade tip (3) and being metallic, electrically conducting, and comprising a suction face arm (13a) and a pressure face arm (13b) which extend over the entire end chord of said blade tip (3) and which are applied to underlying parts of said suction face surface (5) and pressure face surface (6) respectively, in the region of the tip (3), the cap (13) being connected with electrical continuity to said glove (12) either directly or by means of an intermediate linking piece, itself conducting, and fixed with electrical continuity to the glove and the cap, and
- electrically conducting means (18) on said blade root (2) intended to provide electrical continuity between said glove (12) and electrically conducting means of said hub, for earthing said shielding (12, 13), characterized in that at least said cap (13) has a suction face arm (13a) of which the dimensions, at least in the direction of the span, are different from the dimensions of its pressure face arm (13b).

2. Blade according to Claim 1, characterized in that the glove (12) has a suction face arm (12a) and a pressure face arm (12b) which have substantially the same dimensions, at least in the direction of the chord of the blade.

3. Blade according to Claim 1, characterized in that the glove (12') has a suction face arm (12'a) of which the dimensions, at least in the direction of the chord of the blade, are different from those of its pressure face arm (12'b).

4. Blade according to any one of Claims 1 to 3, characterized in that at least one of said suction face and pressure face arms (13a, 13b) of the cap (13) has a dimension and/or material section in the direction of the span which is larger in the region near the leading edge (7) than in the region near the trailing edge (8).

5. Blade according to Claim 4, characterized in that at least one of said suction face and pressure face arms (33a, 33b) of the cap (33) has a dimension and/or material section, in the direction of the span, which reduces substantially progressively from a region near the leading edge (7) to a region near the trailing edge (8), then which increases in a region directly adjacent to the trailing edge (8) and as far as the latter.

6. Blade according to any one of Claims 1 to 5, characterized in that at least one of said suction face and pressure face arms (13a, 13b) of the cap (13) has, in its region near the leading edge (7), a dimension and/or material section in the direction of the span which is not substantially smaller than the dimension and/or material section in the direction of the chord of the adjacent region of the corresponding suction face arm (12a) or pressure face arm (12b) of the glove (12).

7. Blade according to any one of Claims 1 to 6, characterized in that at least one of the suction face and pressure face arms (13a, 13b) of the cap (13) has, in its region near the leading edge (7), an edge (16a, 16b) extending in the direction of said corresponding suction face or pressure face surface (5, 6) and which has a concave part, with a blend radius, substantially extended by the corresponding edge (14a, 14b) of the corresponding suction face or pressure face arm (12a, 12b) of the glove (12).

8. Blade according to any one of Claims 1 to 7, characterized in that at least one of the suction face and pressure face arms (13'a, 13'b) of the cap (13') has, at least in its region near the leading edge (7), a developed transverse section which is at least equal to or greater than that of the corresponding suction face or pressure face arm (12'a, 12'b) of the glove (12) in its region adjacent to the cap (13').

9. Blade according to one of Claims 1 to 8, characterized in that the edges (16a, 16b) of the suction face and pressure face arms (13a, 13b) of the cap (13) which extend in the direction of said suction face and pressure face surfaces (5, 6) evolve parallel to one another but are offset one with respect to the other in the direction of the span of the blade, following a line which is polygonal or has a continuous curvature.

10. Blade according to any one of Claims 1 to 9, in which the tip (3') is truncated along at least part of i the chord and has a straight or curved, such as parabolic, leading edge inclined towards the trailing edge (8') and towards the end of the tip (3') and a straight end face, characterized in that the cap (43) has an inclined leading edge (50) of the same shape as that of the tip (3') and along which its suction face and pressure face arms (43a, 43b) are adjacent and secured together.

11. Blade according to any one of Claims 1 to 10, characterized in that said cap (13) is fixed against at least the end face (10) of said composite structure (20) in the region of said blade tip (3) with the aid of fixing means (11) which are electrically conducting at least in part.

12. Blade according to Claim 11, characterized in that the fixing means comprise at least one adhesive, possibly an electrically conducting adhesive, for gluing the cap (13) against at least part of the end face (10) of the blade tip (3) and/or part of at least one of said suction face surface (5) and pressure face surface (6) of the composite structure (20), and/or part of the glove (12) and/or of the intermediate linking piece itself glued against at least part of the glove (12).

13. Blade according to one of Claims 11 to 12, characterized in that said fixing means comprise mechanical means (11, 17) having protruding shapes, such as screws and rivets, constituting predetermined points for the lightning to strike or to exit, and placed in electrical continuity with said cap (13).

14. Blade according to Claim 13, characterized in that said mechanical fixing means comprise at least one screw (11) for balancing and/or for closing a housing (23) of at least one balancing and/or dynamic-adjustment weight and which is screwed into a region of said end face (10) of the blade tip (3) which is closer to said leading edge (7) than to the trailing edge (8)

15. Blade according to Claim 14, characterized in that said screw (11) fixes against said end face (10) of the blade tip (3) at least one cap lug (13c, 13d) which extends at least one of said suction face arm (13a) and pressure face arm (13b) of said cap (13) and is bent with respect to said suction face arm (13a) and pressure face arm (13b) of the cap.

16. Blade according to Claim 14, characterized in that said screw (11) fixes against said end face of the blade tip (3) an electrically conducting end flange (33e) of the cap (33), connecting said suction face arm (33a) and pressure face arm (33b) of the cap (33) and extending in the direction of the entire section of said end face.

17. Blade according to any one of Claims 12 to 15, characterized in that said cap (33', 33'') comprises an electrically conducting partial end flange (33'e, 33"e) connecting the suction face arms (33'a, 33''a) and pressure face arms (33''a, 33''b) of the cap (33', 33") with which arms said partial flange (33'c, 33"c) is in electrical continuity, and extending in the direction of part of the section of said end face (10) which is adjacent to said trailing edge (8).

18. Blade according to Claim 17, characterized in that said partial end flange (33'e) comprises at least one cap flap which extends one of said suction face and pressure face arms (33'a, 33'b) of the cap (33') and is bent against said end face part (10) adjacent to the trailing edge (8), said flap (33'e) being fixed, preferably by welding, to the other of said suction face and pressure face arms (33'a, 33'b) of the cap (33').

19. Blade according to Claim 17, characterized in that said partial end flange (33''e) comprises at least one double cap flap (33''f) which extends one of said suction face and pressure face arms (33''a, 33''b) of the cap (33''), and of which a first part (33''g), adjacent to said arm (33''a, 33''b) of the cap (33'') is bent against said end face part (10) adjacent to the trailing edge (8), whereas the second part (33''h) of the double flap (33''f), adjacent to the first part (33''g) thereof is cranked with respect to the first part (33''g) of said double flap (33''f) and fixed, preferably by at least one rivet (25), against a second flap (33"i) extending the other of said suction face and pressure face arms (33"a, 33''b) of the cap (33'') and projecting in the direction of the span beyond said end face (10) of the blade tip (3) .

20. Blade according to any one of Claims 1 to 15, characterized in that the cap (133) includes an electrically conducting at least partial end flange (133e) in electrical continuity with the suction face arm (133a) and pressure face arm (133b) of the cap (133) and pierced with at least one slot through which at least one electrically conducting fin (134) secured to the composite structure of the blade and projecting in the direction of the span towards the outside of the blade tip (3) passes, that face of the fin (134) which projects outside the flange (133e) being bent, at least in part (134a, 134b) against said flange (133e) so as to keep the flange (133e) applied against the end face (10) of the blade.

21. Blade according to any one of Claims 1 to 15, characterized in that the composite structure of the blade is extended, in the direction of the span and projecting outside the blade tip (3), by at least one electrically conducting fin (234) secured to said composite structure and against two opposed faces of which there are fixed, by gluing, preferably using a conducting glue and/or by riveting (237) or screwing of the cranked parts (236a, 236b), at least two lugs (235a, 235b) bent against the end face (10) of the blade tip (3) and each secured respectively to one of the suction face arm (233a) and pressure face arm (233b) of the cap (233).

22. Blade according to any one of Claims 13 to 20, characterized in that said mechanical fixing means comprise at least one rivet (17) fixing at least one of said suction face arm (13a) and pressure face arm (13b) of said cap (13) against at least one of said suction face arm (12a) and pressure face arm (12b) of said glove (12) or of the intermediate linking piece and/or against at least one of said suction face surface (5) and pressure face surface (6) in the region of the blade tip (3), in a region near the trailing edge (8) and/or in a region near the leading edge (7) and/or the conducting fin, as appropriate.

23. Blade according to any one of Claims 1 to 22, characterized in that said electrically conducting means of said blade root (2), in order to provide electrical continuity between the glove (12) and the hub, comprise at least one tape (18) and/or a braid which is metallic and electrically conducting extending from one end of said glove (12) which is closest to said blade root (2) as far as a fixed point (19) of said blade root (2) and fixed thereto by gluing and/or riveting or screwing.

24. Blade according to any one of Claims 1 to 22, characterized in that said electrically conducting means of said blade root (2), in order to provide electrical continuity between the glove (12) and the hub, comprise a continuous extension (12c) of said glove (12) which protects part of said blade root (2) coming into alignment with the leading edge as far as close to said blade attachment means (9), said extension (12c) of the glove (12) being fixed at least at one point against said blade root (2) by mechanical fixing means (19) of the screw or rivet type and/or by an adhesive, preferably a conducting adhesive.

25. Blade according to any one of Claims 1 to 22, in which said blade attachment means (9) comprise, on the blade root (2), at least one metallic and electrically conducting attachment bushing (9), characterized in that said electrically conducting means of said blade root (2), in order to provide electrical continuity between the glove (12) and the hub, comprise a continuous extension (12c) of said glove (12) which extends as far as being in direct connection (12d) with said attachment bushing (9).

26. Blade according to any one of Claims 1 to 25, characterized in that said cap (13'') has a trailing end (24) which protrudes projecting beyond said trailing edge (8) of the blade.

27. Blade according to any one of Claims 1 to 26, in which the reinforcing fibres of said composite structure (20) comprise carbon fibres, characterized in that it comprises, at least between said main blade section (1) and said glove (12) for the leading edge (7), an underlying dielectric glove (25), preferably a composite one with a synthetic matrix and reinforcing fibres of glass insulates the leading edge glove (12) from said composite structure (20).

28. Blade according to any one of Claims 1 to 27, characterized in that the cap (13) is of a material of the same nature as the glove (12), and preferably of titanium, formed stainless steel, or electroformed nickel.
